# EUROPÄISCHE PATENTSCHRIFT

(11) **EP 4 025 438 B1**
(45) Veröffentlichungstag und Bekanntmachung des Hinweises auf die Patenterteilung: **31.01.2024**
(21) Anmeldenummer: 20761219.3
(22) Anmeldetag: 21.08.2020
(51) Int. Cl.: B60D 1/06, B60D 1/54, B60D 1/62

(54) **STEUERGERÄT FÜR EINE ANHÄNGEKUPPLUNG MIT HINDERNISÜBERWACHUNG**
CONTROL UNIT FOR A TRAILER COUPLING WITH OBSTACLE MONITORING
UNITÉ DE COMMANDE D'ATTELAGE DE REMORQUE COMPORTANT UNE SURVEILLANCE D'OBSTACLES

(30) Priorität: 06.09.2019 DE 102019124024; 10.12.2019 DE 102019133790
(43) Veröffentlichungstag der Anmeldung: 13.07.2022
(73) Patentinhaber: WESTFALIA - Automotive GmbH, 33378 Rheda-Wiedenbrück (DE)
(72) Erfinder: KRANZ, Torsten, 59590 Geseke (DE)
(74) Vertreter: Patentanwälte Bregenzer und Reule Partnerschaftsgesellschaft mbB
(86) Internationale Anmeldenummer: PCT/EP2020/073543
(87) Internationale Veröffentlichungsnummer: WO 2021/043602

(56) Entgegenhaltungen:
- DE-A1-102009 012 709
- DE-A1-102014 000 859
- DE-A1-102015 204 902

## Beschreibung

Die Erfindung betrifft ein Steuergerät für eine Anhängekupplung für ein Kraftfahrzeug, die einen an dem Kraftfahrzeug fahrzeugfest montierten oder montierbaren Halter, an dem ein Kupplungsarm zwischen einer zum Anhängen eines Anhängers oder Ankoppeln eines Lastenträgers an das Kraftfahrzeug vorgesehenen Gebrauchsstellung und einer für den Nichtgebrauch des Kupplungsarms vorgesehenen Nichtgebrauchsstellung anhand einer Lagereinrichtung beweglich gelagert ist, wobei der Kupplungsarm an einem von der Lagereinrichtung entfernten Endbereich einen Kuppelkörper, insbesondere eine Kupplungskugel, zum Anhängen des Anhängers oder Ankoppeln des Lastenträgers aufweist, wobei die Anhängekupplung einen Kupplungsarm-Antrieb zum Verstellen des Kupplungsarms zwischen der Gebrauchsstellung und der Nichtgebrauchsstellung aufweist, wobei die Anhängekupplung und/oder das Steuergerät eine Sensoranordnung zur Erzeugung mindestens eines Sensorsignals in Abhängigkeit eines Anschlagens des Kupplungsarms an einem Hindernis auf der Bewegungsbahn zwischen der Gebrauchsstellung und der Nichtgebrauchsstellung aufweist, wobei das Steuergerät einen Steuereingang für ein Steuersignal und Steuermittel aufweist, die in Abhängigkeit von dem Steuersignal den Kupplungsarm-Antrieb zum Verstellen des Kupplungsarms in Richtung der Gebrauchsstellung oder der Nichtgebrauchsstellung ansteuern, und wobei das Steuergerät Hinderniserkennungsmittel aufweist, die anhand des Sensorsignals zu einer Ermittlung, ob der Kupplungsarm an einem Hindernis auf der Bewegungsbahn zwischen der Gebrauchsstellung oder Nichtgebrauchsstellung anschlägt, ausgestaltet sind.

Ein derartiges Steuergerät ist beispielsweise aus DE 10 2014 000 859 A1 bekannt.

Eine Verstellung des Kupplungsarms zwischen der Gebrauchsstellung und der Nichtgebrauchsstellung wird üblicherweise durch ein Bedienelement zum Beispiel einen Bedientaster, von einem Bediener ausgelöst. Dann verstellt das Steuergerät den Kupplungsarm zwischen seinen Ausgangspositionen oder Endpositionen, also von der Nichtgebrauchsstellung in die Gebrauchsstellung oder umgekehrt. Der Bediener muss in dieser Situation nichts tun.

Der Kupplungsarm könnte aber auf seinem Weg zwischen Gebrauchsstellung und Nichtgebrauchsstellung beispielsweise an einem Hindernis anschlagen. Das Hindernis kann ein empfindliches Hindernis sein, zum Beispiel ein Gliedmaß eines Menschen, weshalb eine effektive Hinderniserkennung zur Vermeidung von Verletzungen wichtig ist. Aber auch dann, wenn ein sonstiges Hindernis in der Bewegungsbahn ist, zum Beispiel ein Stein, Ast oder dergleichen, sorgt eine Hinderniserkennung für eine Gefahrenvermeidung, weil der Kupplungsarm nicht einfach an diesem Hindernis vorbei bewegt wird. Typischerweise sorgt das Steuergerät für eine Rückstellbewegung des Kupplungsarms, wenn dieser an einem Hindernis angeschlagen hat, in Richtung der Ausgangsstellung, aus der der Kupplungsarm heraus bewegt worden ist. Diese Ausgangsstellung ist eine sozusagen sichere Stellung, in der der Kupplungsarm nicht im Sinne einer Verringerung der Bodenfreiheit des Kraftfahrzeugs orientiert ist, also beispielsweise nicht nach unten von dem Kraftfahrzeug absteht. Dementsprechend steuert das Steuergerät den Kupplungsarm in Richtung der Ausgangsstellung unabhängig davon an, ob ein Bediener an dem Bedienelement dazu einen Befehl gibt oder nicht. Die Rückstellbewegung nach einem Anschlagen an einem Hindernis ist eine automatische Bewegung. Wenn also der Kupplungsarm beispielsweise von der Gebrauchsstellung in die Nichtgebrauchsstellung bewegt wird und dabei an einem Hindernis anschlägt, wird er wieder in Richtung der Gebrauchsstellung zurück bewegt.

Dieses vorgenannte Steuerungskonzept ist zwar betriebssicher, jedoch nicht in allen Fällen komfortabel.

Es ist daher die Aufgabe der vorliegenden Erfindung, ein verbessertes Steuergerät für eine Anhängekupplung bereitzustellen.

Zur Lösung der Aufgabe ist bei einem Steuergerät der eingangs genannten Art vorgesehen, dass die Steuermittel nach dem Anschlagen des Kupplungsarms an dem Hindernis zu mindestens einer erneuten Ansteuerung des Kupplungsarm-Antriebs zum Verstellen des Kupplungsarms in Richtung des Hindernisses, insbesondere im Sinne eines Überwindens des Hindernisses, ohne vorherige Ansteuerung durch das Steuersignal, nach einer dem Anschlagen des Kupplungsarms an dem Hindernis zunächst folgenden Ansteuerung des Kupplungsarm-Antriebs im Sinne einer Bewegung von dem Hindernis weg, ausgestaltet sind.

Die Erfindung betrifft ferner eine Anhängekupplung mit einem derartigen Steuergerät.

Ein Überwinden des Hindernisses kann auch so verstanden werden, dass das Hindernis bei einer erneuten Vorbeifahrbewegung des Kupplungsarms infolge der erneuten Ansteuerung des Kupplungsarm-Antriebs zum Verstellen des Kupplungsarms in Richtung des Hindernisses nicht mehr im Bewegungsweg des Kupplungsarms ist oder möglicherweise nur noch geringen Widerstand leistet. Das kann beispielsweise dann der Fall sein, wenn das Hindernis ein relativ weiches Hindernis ist, zum Beispiel ein Zweig eines Gebüsches. Ein Überwinden des Hindernisses kann also beispielsweise nur ein Vorbeifahren des Kupplungsarmes an dem Ort des Hindernisses sein, an dem sich das Hindernis bei dem erneuten Vorbeifahren des Kupplungsarmes nicht mehr befindet.

Vorzugsweise ist vorgesehen, dass die Steuermittel im Falle eines Anschlagens des Kupplungsarms an dem Hindernis, insbesondere im Falle eines erstmaligen Anschlages an einem jeweiligen Hindernis, zur Ansteuerung des Kupplungsarm-Antriebs im Sinne einer Bewegung des Kupplungsarms von dem Hindernis weg oder zum Anhalten des Kupplungsarms ausgestaltet sind, z.B. als Alternative zu dem Verstellen des Kupplungsarms in Richtung des Hindernisses im Sinne eines Überwindens des Hindernisses. Eine Ansteuerung des Kupplungsarm-Antriebs im Sinne einer Bewegung des Kupplungsarms von dem Hindernis weg kann aber auch dazu dienen, zunächst den Kupplungsarm in einen Abstand zu dem Hindernis zu bewegen, um dann einen erneuten Versuch zu beginnen, dass der Kupplungsarm das Hindernis überwindet, z.B. mit gleicher, einer erhöhten oder einer geringeren Antriebskraft. Eine Ansteuerung des Kupplungsarm-Antriebs im Sinne einer Bewegung des Kupplungsarms von dem Hindernis weg kann aber auch dazu vorgesehen sein, dass die Steuerung den Kupplungsarm-Antrieb zum Verstellen des Kupplungsarms in seine jeweilige Ausgangslage vor dem Anschlagen an dem Hindernis ansteuert, also in die Gebrauchsstellung oder die Nichtgebrauchsstellung. Letzteres ist vorzugsweise der Normalfall.

Bei der erneuten Ansteuerung des Kupplungsarm-Antriebs zum Verstellen des Kupplungsarms in Richtung des Hindernisses im Sinne eines Überwindens des Hindernisses ohne vorherige Ansteuerung durch das Steuersignal können die Steuermittel den Kupplungsarm-Antrieb zum Antreiben des Kupplungsarms mit unveränderter Antriebskraft, aber auch mit einer erhöhten Antriebskraft oder einer geringeren Antriebskraft ansteuern. Die erneute Ansteuerung des Kupplungsarm-Antriebs in Richtung des Hindernisses kann zu einem Überwinden des Hindernisses führen, aber auch dazu, dass der Kupplungsarm wieder an dem Hindernis anschlägt und das Hindernis nicht überwindet. Die Steuermittel können nach dem erneuten oder zweiten Anschlagen des Kupplungsarms an dem Hindernis zu mindestens einer Ansteuerung des Kupplungsarm-Antriebs zum Verstellen des Kupplungsarms von dem Hindernis weg oder zum Anhalten an dem Hindernis ausgestaltet sein.

Der Kupplungsarm steht im am Kraftfahrzeug montierten Zustand z. B. weiter vor ein Heck des Kraftfahrzeugs vor als in der Nichtgebrauchsstellung. In der Gebrauchsstellung steht der Kupplungsarm beispielsweise vor einen Heck-Stoßfänger des Kraftfahrzeugs vor, wenn die Anhängekupplung am Kraftfahrzeug montiert ist. In der Nichtgebrauchsstellung ist der Kupplungsarm im am Kraftfahrzeug montierten Zustand der Anhängekupplung zum Heck-Stoßfänger hin verstellt, insbesondere in einen Zwischenraum zwischen Heck-Stoßfänger und Karosserie des Kraftfahrzeugs hineinverstellt oder unter den Stoßfänger hinunter verstellt.

Ein erfindungsgemäßes Verfahren lässt sich wie folgt definieren:
Verfahren zur Ansteuerung einer Anhängekupplung für ein Kraftfahrzeug durch ein Steuergerät, wobei die Anhängekupplung einen an dem Kraftfahrzeug fahrzeugfest montierten oder montierbaren Halter, an dem ein Kupplungsarm zwischen einer zum Anhängen eines Anhängers oder Ankoppeln eines Lastenträgers an das Kraftfahrzeug vorgesehenen Gebrauchsstellung und einer für den Nichtgebrauch des Kupplungsarms vorgesehenen Nichtgebrauchsstellung anhand einer Lagereinrichtung beweglich gelagert ist, wobei der Kupplungsarm an einem von der Lagereinrichtung entfernten Endbereich einen Kuppelkörper, insbesondere eine Kupplungskugel, zum Anhängen des Anhängers oder Ankoppeln des Lastenträgers aufweist, wobei die Anhängekupplung einen Kupplungsarm-Antrieb zum Verstellen des Kupplungsarms zwischen der Gebrauchsstellung und der Nichtgebrauchsstellung aufweist, wobei die Anhängekupplung und/oder das Steuergerät eine Sensoranordnung zur Erzeugung mindestens eines Sensorsignals in Abhängigkeit eines Anschlagens des Kupplungsarms an einem Hindernis auf der Bewegungsbahn zwischen der Gebrauchsstellung und der Nichtgebrauchsstellung aufweist, wobei das Steuergerät einen Steuereingang für ein Steuersignal und Steuermittel aufweist, wobei die Steuermittel in Abhängigkeit von dem Steuersignal den Kupplungsarm-Antrieb zum Verstellen des Kupplungsarms in Richtung der Gebrauchsstellung oder der Nichtgebrauchsstellung ansteuern, und wobei das Steuergerät Hinderniserkennungsmittel aufweist, wobei die Hinderniserkennungsmittel anhand des Sensorsignals ermitteln, ob der Kupplungsarm an einem Hindernis auf der Bewegungsbahn zwischen der Gebrauchsstellung oder Nichtgebrauchsstellung anschlägt. Es ist vorgesehen, dass die Steuermittel nach dem Anschlagen des Kupplungsarms an dem Hindernis den Kupplungsarm-Antrieb zum Verstellen des Kupplungsarms in Richtung des Hindernisses, insbesondere im Sinne eines Überwindens des Hindernisses, ohne vorherige Ansteuerung durch das Steuersignal mindestens einmal erneut ansteuern, insbesondere nach einer dem Anschlagen des Kupplungsarms an dem Hindernis zunächst folgenden Ansteuerung des Kupplungsarm-Antriebs im Sinne einer Bewegung von dem Hindernis weg.

Sämtliche nachfolgend im Zusammenhang mit dem Steuergerät beschriebenen, insbesondere vorteilhaften, Verfahrensschritte können selbstverständlich auch bei einem erfindungsgemäßen Verfahren vorteilhaft vorgesehen sein. Wenn nachfolgend Verfahrensschritte, insbesondere vorteilhafte Verfahrensschritte, beschrieben sind, ist das Steuergerät vorteilhaft zu deren Ausführung ausgestaltet, beispielsweise anhand von Programmcode, der durch einen Prozessor des Steuergeräts ausführbar ist.

Es ist dabei ein Grundgedanke, dass der Kupplungsarm sozusagen am Hindernis vorbei bewegt werden soll, auch wenn das bei einem ersten Versuch oder vorherigen Versuch zunächst nicht oder noch nicht funktioniert hat. Vereinfacht gesagt macht das Steuergerät zumindest einen Versuch, den Kupplungsarm an dem Hindernis vorbei zu bewegen. Dabei ist es beispielsweise möglich, dass bei diesem weiteren Versuch das Hindernis gar nicht mehr in der Bewegungsbahn ist. So kann das Hindernis beispielsweise der Körper oder ein Gliedmaß einer Person sein, die irrtümlicherweise in die Bewegungsbahn des Kupplungsarms eingreift. Wenn der Kupplungsarm an diesem sozusagen menschlichen Hindernis anschlägt, ist eine typische Reaktion, dass die Person sich aus der Bewegungsbahn weg bewegt, also beispielsweise einen Fuß zurückzieht oder dergleichen. Wenn dann das Steuergerät den Kupplungsarm wieder in Richtung des zuvor noch vorhandenen Hindernisses ansteuert, ist dieses nicht mehr in der Bewegungsbahn und die an sich durch das Steuersignal ausgelöste Bewegung des Kupplungsarms von der Gebrauchsstellung in die Nichtgebrauchsstellung oder umgekehrt kann vollständig abgeschlossen werden.

Die vorgenannte Hindernisüberwindung, d. h. der mindestens eine erneute Versuch des Steuergeräts, den Kupplungsarm an dem Hindernis vorbei zu bewegen, muss jedoch nicht in jedem Fall durchgeführt werden:
Ein mögliches Konzept sieht beispielsweise vor, dass die Steuermittel dazu ausgestaltet sind, nach einem Anschlagen des Kupplungsarms an dem Hindernis den Kupplungsarm im Sinne einer Bewegung von dem Hindernis weg in Richtung der jeweiligen Ausgangsstellung, der Gebrauchsstellung oder der Nichtgebrauchsstellung, aus der der Kupplungsarm in Richtung des Hindernisses bewegt worden ist, anzusteuern. Vorzugsweise ist für einen Normalbetrieb vorgesehen, dass die Steuermittel den Kupplungsarm-Antrieb bis zu einem Erreichen der jeweiligen Ausgangsstellung ansteuern. Regelmäßig erfolgt vorzugsweise dann kein Versuch, das Hindernis zu überwinden, sondern die an sich bekannte Rückstellbewegung des Kupplungsarms in Richtung der Ausgangsposition, aus der heraus er in Richtung des Hindernisses bewegt worden ist. Wenn also der Kupplungsarm an einem Hindernis erstmals anschlägt, steuern die Steuermittel den Kupplungsarm-Antrieb zu einer Bewegungsumkehr an, nämlich von dem Hindernis weg. Wenn der Kupplungsarm problemlos von dem Hindernis weg in Richtung seiner Ausgangsstellung bewegbar ist, steuert das Steuergerät den Kupplungsarm-Antrieb dementsprechend bis zum Erreichen der Ausgangsstellung an. Das ist bei dem obigen Szenario sozusagen der Normalfall oder Regelbetrieb.

Bei diesem Normalbetrieb oder Regelbetrieb kann es dazu kommen, dass der Kupplungsarm nicht mehr in die Ausgangsstellung zurückverstellbar ist, beispielsweise dann, wenn der Kupplungsarm an einem weiteren Hindernis auf der Bewegungsbahn in Richtung Ausgangsstellung anschlägt. Man kann sich die Situation beispielsweise so vorstellen, dass sich bei der Rückwärtsbewegung des Kupplungsarms in Richtung der Ausgangsstellung ein weiteres Hindernis in die Bewegungsbahn hinein bewegt hat. Der Kupplungsarm kann zwischen diesen beiden Hindernissen sozusagen gefangen sein.

Ein bevorzugtes Konzept sieht vor, dass die Steuermittel dazu ausgestaltet sind, wenn der Kupplungsarm bei der, z.B. im Normalbetrieb vorgesehenen, Verstellung in Richtung der Ausgangsposition von dem ein erstes Hindernis bildenden Hindernis an einem zweiten Hindernis anschlägt, den Kupplungsarm-Antrieb zu einer Bewegungsumkehr, insbesondere ohne eine Ansteuerung durch das Steuersignal oder nach Erhalt mindestens eines weiteren Steuersignals, im Sinne einer Bewegung von dem zweiten Hindernis weg in Richtung des ersten Hindernisses im Sinne eines Überwindens des ersten Hindernisses anzusteuern. Dann kann es nämlich sein, dass dieses erste Hindernis nicht mehr in der Bewegungsbahn ist, beispielsweise weil es von einem Bediener der Anhängekupplung weg bewegt worden ist, sodass der Kupplungsarm über den Ort des ersten Hindernisses hinweg bewegbar ist. Ein Steuersignal ist zu dieser automatischen Bewegungsfolge nicht notwendig und/oder nicht vorgesehen. Das Steuergerät steuert den Kupplungsarm-Antrieb automatisch zu dieser Bewegungsfolge an. Möglich ist es aber, dass das Steuergerät beim Anschlagen des Kupplungsarms an dem zweiten Hindernis den Kupplungsarm-Antrieb prinzipiell zum Anhalten ansteuert und erst nach Erhalt eines weiteren Steuersignals die vorgenannte Bewegungsumkehr vornimmt, also den Kupplungsarm-Antrieb zur Verstellung des Kupplungsarms in Richtung des ersten Hindernisses zurück ansteuert.

Ein bevorzugtes Konzept sieht vor, dass die Steuermittel dazu ausgestaltet sind, den Kupplungsarm-Antrieb nur dann zu einer Bewegung im Sinne eines Überwindens des Hindernisses anzusteuern, wenn der Kupplungsarm von dem Hindernis weg in Richtung der Ausgangsstellung ohne Anschlagen an einem weiteren Hindernis bewegbar ist. Der Kupplungsarm wird also üblicherweise in Richtung der Ausgangsstellung bewegt, jedoch nur dann weiter bewegt, wenn er nicht an einem weiteren Hindernis anschlägt. Wenn jedoch der Kupplungsarm an einem weiteren Hindernis anschlägt, steuert das Steuergerät ohne eine Ansteuerung durch das Steuersignal, d. h. zum Beispiel ohne Bedienhandlung eines Bedieners, den Kupplungsarm zu einer Bewegungsumkehr an. Dann bewegt sich der Kupplungsarm von dem sozusagen zweiten Hindernis weg in Richtung des ersten Hindernisses.

Die Steuermittel können den Kupplungsarm-Antrieb auch zu einer Art Oszillationsbewegung des Kupplungsarmes zwischen Hindernissen ansteuern, bei der der Kupplungsarm vom einen Hindernis weg in Richtung des anderen Hindernisses bewegt wird und dann, wenn der Kupplungsarm an diesem Hindernis anschlägt, wieder in Richtung des vorherigen Hindernisses zurückbewegt wird. Der Kupplungsarm kann sich auf diese Weise zum Beispiel seine Bewegungsbahn sozusagen frei räumen, insbesondere wenn nachgiebige oder weiche Hindernisse zu überwinden sind.

Ein Konzept kann beispielsweise vorsehen, dass die Steuermittel dazu ausgestaltet sind, nach dem Anschlagen des Kupplungsarms an einem jeweiligen Hindernis den Kupplungsarm-Antrieb zu einer Bewegungsumkehr in Richtung eines vorherigen Hindernisses im Sinne einer oszillierenden Bewegung anzusteuern. Wenn der Kupplungsarm nach einer Bewegungsumkehr an einem jeweiligen Hindernis das vorherige Hindernis bei dieser Rückwärtsbewegung nicht überwinden kann, wird er von den Steuermitteln wieder in einer Bewegungsrichtung von diesem Hindernis weg angesteuert oder angehalten.

Die Anzahl der Versuche, ein Hindernis, beispielsweise ein erstes Hindernis auf der Bewegungsbahn, zu überwinden, kann begrenzt sein.

Bevorzugt ist vorgesehen, dass die Steuermittel dazu ausgestaltet sind, nach dem Anschlagen des Kupplungsarms an einem jeweiligen Hindernis den Kupplungsarm-Antrieb zu einer vorbestimmten und/oder einstellbaren Anzahl von Versuchen zu einem Verstellen des Kupplungsarms in Richtung des Hindernisses im Sinne eines Überwindens des Hindernisses ohne vorherige Ansteuerung durch das Steuersignal anzusteuern. So kann definiert sein, dass das Steuergerät den Kupplungsarm nur zu einem einmaligen Überwindungsversuch eines jeweiligen Hindernisses ansteuert oder dass die Steuermittel den Kupplungsarm-Antrieb für mindestens zwei Versuche zur Hindernisüberwindung ansteuern.

Auch bei der vorgenannten oszillierenden Bewegung des Kupplungsarms ist es vorteilhaft, wenn diese Oszillationsbewegung auf eine vorbestimmte Anzahl von Versuchen, eines der Hindernisse zu überwinden, und/oder eine vorbestimmte Anzahl von Oszillationsbewegungen begrenzt ist.

Eine vorteilhafte Ausführungsform kann vorsehen, dass die Steuermittel dazu ausgestaltet sind, nach einem Anschlagen des Kupplungsarms an einem Hindernis den Kupplungsarm-Antrieb nach einer vorbestimmten oder einstellbaren Wartezeit ohne vorherige Ansteuerung durch das Steuersignal erneut zum Verstellen des Kupplungsarms in Richtung eines Hindernisses im Sinne eines Überwindens des Hindernisses anzusteuern. Der Kupplungsarm kann nach dem Anhalten an dem Hindernis eine vorbestimmte Zeit stehen bleiben. Dann hat beispielsweise ein sozusagen menschliches Hindernis Gelegenheit, sich aus der Bewegungsbahn wegzubewegen oder hat eine Bedienperson die Möglichkeit, dass Hindernis aus der Bewegungsbahn zu entfernen. Die Wartezeit kann beispielsweise über eine Parametrierschnittstelle parametrierbar sein.

Ein vorteilhaftes Konzept sieht vor, dass die Steuermittel dazu ausgestaltet sind, den Kupplungsarm-Antrieb nach einer vorbestimmten und/oder einstellbaren Anzahl von Versuchen, ein jeweiliges Hindernis zu überwinden, zu einer Bewegungsumkehr von dem Hindernis weg anzusteuern. So kann beispielsweise der Kupplungsarm nach einem Anschlagen an dem Hindernis zunächst durch das Steuergerät oder die Steuermittel angehalten werden. Nach einer Wartezeit steuern die Steuermittel den Kupplungsarm-Antrieb zu einer erneuten Bewegung des Kupplungsarms in Richtung des Hindernisses an. Wenn dann das Hindernis überwunden werden kann, steuern die Steuermittel den Kupplungsarm-Antrieb zu einer weiteren Bewegung des Kupplungsarms an dem Hindernis vorbei an, also beispielsweise in diejenige Richtung, die durch das Steuersignal ursprünglich vorgegeben worden ist. Wenn jedoch bei dem erneuten Versuch das Hindernis zu überwinden der Kupplungsarm am Hindernis wieder anschlägt, steuern die Steuermittel den Kupplungsarm-Antrieb zu einer Bewegung des Kupplungsarms im Sinne von dem Hindernis weg, also zu einer Bewegungsumkehr, an.

Die Hinderniserkennungsmittel vergleichen das Sensorsignal mit mindestens einem Grenzwert, um ein Hindernis zu erkennen.

Das Sensorsignal umfasst beispielsweise ein Bewegungssignal, insbesondere ein Drehzahlsignal, des Kupplungsarm-Antriebs oder des Kupplungsarms. Das Sensorsignal kann beispielsweise das Signal eines Hall-Sensors des Kupplungsarm-Antriebs sein. Wenn das Bewegungssignal einen Stillstand signalisiert, ist dies für die Hinderniserkennungsmittel ein Indiz dafür, dass der Kupplungsarm an dem Hindernis anschlägt. Die Sensoranordnung weist vorzugsweise mindestens einen Bewegungssensor, insbesondere einen Hall-Sensor und/oder Drehsensor, zur Erfassung einer Bewegung, insbesondere Schwenk-Bewegung, des Kupplungsarms auf.

Das Sensorsignal kann auch ein Stromsignal umfassen oder dadurch gebildet sein. Die Sensoranordnung weist vorteilhaft mindestens einen Stromsensor zur Erfassung eines den Kupplungsarm-Antrieb durchfließenden Motorstroms auf.

Vorteilhaft ist vorgesehen, dass die Sensoranordnung ganz oder teilweise einen Bestandteil des Steuergeräts bildet. Die Sensoranordnung kann auch ganz oder teilweise von dem Steuergerät separat sein.

Bei dem Steuergerät und/oder dem Hinderniserkennungsmittel ist vorteilhaft vorgesehen, dass einen ersten einem ersten Bewegungsabschnitt der Bewegungsbahn des Kupplungsarms zugeordneten Grenzwert und mindestens einen von dem ersten Grenzwert verschiedenen zweiten, einem zweiten von dem ersten Bewegungsabschnitt verschiedenen Bewegungsabschnitt der Bewegungsbahn des Kupplungsarms zugeordneten Grenzwert für das mindestens eine Sensorsignal aufweist.

Der Begriff Anhängersteckdose in der vorliegenden Beschreibung und den Ansprüchen steht exemplarisch für eine elektrische Anschlussvorrichtung zum Anschließen elektrischer Komponenten, zum Beispiel Leuchten, des Anhängers oder Lastenträgers. Eine derartige Anschlussvorrichtung kann die Gestalt einer Anhängersteckdose haben. Aber auch eine sonstige Kontaktanordnung, mit der der Anhänger oder Lastenträger elektrisch verbindbar ist, soll unter dem Begriff Anhängersteckdose verstanden sein.

Wenn im Zusammenhang mit dem Steuergerät oder einer sonstigen Einrichtung, beispielsweise einer Bereitstellungseinrichtung oder Testeinrichtung, Verfahrensschritte oder Verfahrensmerkmale definiert sind, ist das erfindungsgemäße Verfahren zur Ausführung dieses Verfahrensschritts oder Verfahrensmerkmals ausgestaltet. Ohne weiteres weist das Steuergerät zur Ausführung von Verfahrensmerkmalen oder Verfahrensschritten geeignete Mittel auf, zum Beispiel Softwaremodule, insbesondere Prüfmodule, Funktionssoftwaremodul etc., die durch den Prozessor des Steuergeräts ausführbaren Programmcode enthalten, sodass bei Ausführung des Programmcodes das Steuergerät die jeweiligen Verfahrensmerkmale oder Verfahrensschritte leisten kann. Wenn zur Ausführung von Verfahrensschritten elektronische Mittel oder elektrische Mittel notwendig sind, zum Beispiel Signaleingänge oder Signalausgänge, leistungselektronische Komponenten oder dergleichen, sind diese bei dem Steuergerät vorgesehen.

Ein Speicher des Steuergeräts enthält vorzugsweise beim Betrieb durch den Prozessor wiederbeschreibbaren Arbeitsspeicher, z.B. sogenanntes RAM (= Random Access Memory), und vorteilhaft nichtflüchtigen Speicher, in welchem Software dauerhaft speicherbar ist, beispielsweise ein Funktionssoftwaremodul zum Betrieb des Steuergeräts. In diesem nichtflüchtigen Speicher sind vorzugsweise Funktionsparameter für das mindestens eine Funktionssoftwaremodul gespeichert. Der nichtflüchtige Speicher kann ein wiederbeschreibbarer Speicher sein, beispielsweise ein sogenannter Flash-Speicher, ein EPROM oder EEPROM.

Bevorzugt ist es, wenn der Kupplungsarm in der Nichtgebrauchstellung und/oder der Gebrauchsstellung durch eine Fixiereinrichtung fixierbar ist. Die Fixiereinrichtung weist zweckmäßigerweise einen Fixier-Antrieb auf. Der Fixier-Antrieb ist zweckmäßigerweise durch das Steuergerät ansteuerbar, zum Beispiel durch dessen Steuermittel.

Der Fixier-Antrieb kann ein Fixieren und/oder ein Lösen der Fixierung bewirken. Der Fixier-Antrieb kann beispielsweise mindestens ein Formschlusselement in Richtung einer den Kupplungsarm bezüglich des Halters fixierenden Stellung antreiben. Der Fixier-Antrieb kann beispielsweise ein Löseantrieb sein. Die Fixiereinrichtung ist vorzugsweise in Richtung der Fixierstellung, in der der Kupplungsarm bezüglich des Halters ortsfest fixiert ist, federbelastet. Die Fixiereinrichtung umfasst beispielsweise mindestens ein zum Fixieren des Kupplungsarms bezüglich des Halters vorgesehenes Formschlusselement. Das mindestens eine Formschlusselement ist beispielsweise in Richtung der Fixierstellung durch eine Federanordnung belastet. Das mindestens eine Formschlusselement ist durch den Fixier-Antrieb antreibbar. Der Fixier-Antrieb kann die Fixiereinrichtung vorzugsweise entgegen der Kraft der Federbelastung oder Feder lösen.

Vorteilhaft ist vorgesehen, dass das Steuergerät oder die Steuermittel zunächst den Fixier-Antrieb im Sinne eines Lösens der Fixierung des Kupplungsarms ansteuern und dann den Kupplungsarm-Antrieb im Sinne eines Verstellens des Kupplungsarms in Richtung der jeweils nachfolgenden Gebrauchsstellung oder Nichtgebrauchstellung ansteuern oder zu einer derartigen Ansteuerung ausgestaltet sind. Das Steuergerät oder die Steuermittel steuern weiterhin den Fixier-Antrieb derart an, dass die Fixiereinrichtung dann, wenn der Kupplungsarm dann die jeweils nachfolgende Gebrauchsstellung oder Nichtgebrauchstellung erreicht hat, den Kupplungsarm fixieren kann.

Nachfolgend werden Ausführungsbeispiele der Erfindung anhand der Zeichnung erläutert. Es zeigen:
- Figur 1: eine schematische Seitenansicht eines Kraftfahrzeugs mit einer Anhängekupplung,
- Figur 2: die Anhängekupplung des Kraftfahrzeugs gemäß Figur 1 mit einem Steuergerät sowie angeschlossenen Kraftfahrzeugbusmodulen in schematischer Darstellung,
- Figuren 3a-3h: verschiedene Stellungen eines Kupplungsarms der Anhängekupplung bezüglich des Halters,
- Figur 4: einen Verlauf einer Testspannung zum Prüfen des Steuergeräts gemäß Figur 2,
- Figur 5: eine schematische Darstellung einer Testroutine mit veränderlichen Parameterwerten,
- Figur 6: eine schematische Darstellung einer Software-Testfunktion,
- Figur 7: ein Ablaufdiagramm einer Validierungsfunktion einer Validierungseinrichtung.

Ein Kraftfahrzeug 80 mit einer Karosserie 81 ist durch einen Motor 82, beispielsweise einen Elektromotor, einen Verbrennungsmotor oder eine Kombination davon, angetrieben. Der Motor 82 treibt in an sich bekannter Weise Räder 83 an. An das Kraftfahrzeug 80 kann ein Anhänger 180 anhand einer Anhängekupplung 10 angehängt werden.

Die Anhängekupplung 10 umfasst beispielsweise eine Trägeranordnung 11, die an der Karosserie 81 des Kraftfahrzeugs 80 befestigt ist, beispielsweise verschraubt, verschweißt oder dergleichen. An der Trägeranordnung 11, insbesondere einem Querträger derselben, ist ein Halter 12 der Anhängekupplung 10 befestigt, welcher beispielsweise zu einem festen Halten eines Kupplungsarms 14 ausgestaltet ist oder zum lösbaren Halten des Kupplungsarms 14 z.B. eine Steckaufnahme (nicht dargestellt) zum Einstecken eines Kupplungsarms 14 aufweisen kann.

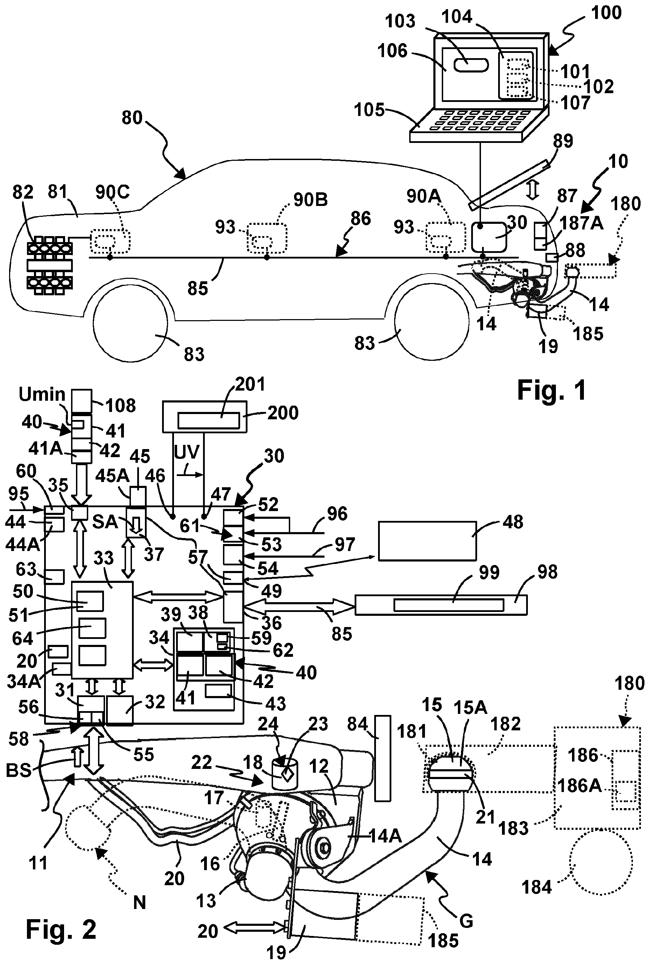

Vorliegend ist jedoch am Halter 12 eine Lagereinrichtung 13, die insbesondere ein Schwenklager, Schiebelager oder Schwenk-Schiebelager umfasst oder dadurch gebildet ist, vorgesehen, mit der der Kupplungsarm 14 zwischen einer in durchgezogenen Linien in Figur 2 dargestellten Gebrauchsstellung G und einer in gestrichelten Linien dargestellten Nichtgebrauchsstellung N verstellbar ist.

Der Kupplungsarm 14 ist anhand eines Kupplungsarm-Antriebs 18 zwischen der Gebrauchsstellung G und der Nichtgebrauchsstellung N antreibbar.

Der Kupplungsarm 14 trägt an seinem freien Ende eine Kupplungskugel 15, die exemplarisch für andersartige Kuppelkörper 15A, beispielsweise polygonale Kuppelelemente oder dergleichen steht. Die Kupplungskugel 15 und der die Kupplungskugel 15 tragende Abschnitt des Kupplungsarms 14 ist in der Gebrauchsstellung G vor einen Stoßfänger 84 vorverstellt, so dass der Anhänger 180 ankuppelbar ist. Beispielsweise ist eine Zugkugelkupplung 181 des Anhängers 180, welche an einer Deichsel 182 angeordnet ist, an das Kuppelelement bzw. die Kupplungskugel 15 ankuppelbar.

Der Anhänger 180 weist einen Grundkörper 183, beispielsweise eine Lademulde, einen Wohnwagenaufbau oder dergleichen, auf, der auf Rädern 184 auf einem Untergrund rollbar ist. Der Anhänger 180 weist weiterhin einen Steckverbinder 185 auf, über den eine Beleuchtungseinrichtung 186 des Anhängers 180 mit Strom versorgbar ist. Im Einzelnen nicht dargestellte Leuchten, beispielsweise Heckleuchten, Bremsleuchten, Blinker oder dergleichen, der Beleuchtungseinrichtung 186 können über eine entsprechende Ansteuerung bzw. Bestromung des Steckverbinders 185, der vorzugsweise individuelle Kontakte aufweist, mit Strom versorgt und angesteuert werden.

Zum Einstecken des Steckverbinders 185 des Anhängers 180 dient eine Anhängersteckdose 19. Diese kann beispielsweise am Kupplungsarm 14 oder einem separaten Halter 14a angeordnet sein.

Der Kupplungsarm 14 ist anhand einer Fixiereinrichtung 16 zumindest in der Gebrauchsstellung G fixierbar, beispielsweise formschlüssig fixierbar und/oder verklemmbar. Zum Lösen und/oder Schließen bzw. Verriegeln der Fixiereinrichtung 16 ist vorteilhaft ein Fixier-Antrieb 17 vorgesehen. Zweckmäßigerweise ist die Fixiereinrichtung 16 in die den Kupplungsarm 14 in der Gebrauchsstellung G verriegelnde Stellung federbelastet, so dass der Fixier-Antrieb 17 einen Löseantrieb darstellt.

Wenn der Fixier-Antrieb 17 aktiviert wird, wird die Fixierung des Kupplungsarms 14 bezüglich des Halters 12 gelöst, sodass der Kupplungsarm 14 aus der Gebrauchsstellung G in die Nichtgebrauchsstellung N verstellbar ist, beispielsweise verschwenkbar ist oder auch vom Halter 12 entfernt werden kann, wenn die in der Zeichnung nicht dargestellte Ausführungsform, bei der der Kupplungsarm 14 lösbar am Halter 12 befestigbar ist, realisiert ist.

Das Kraftfahrzeug 80 weist ein Bordnetz 86 mit einem digitalen Datenbus 85, beispielsweise einem CAN-Bus auf. An den Datenbus 85 sind Kraftfahrzeugbusmodule 90A, 90B, 90C angeschlossen, die nachfolgend auch allgemein als "Kraftfahrzeugbusmodule 90" bezeichnet werden. Beispielsweise handelt es sich bei dem Kraftfahrzeugbusmodul 90C um ein Motorsteuergerät zur Ansteuerung des Motors 82. Das Kraftfahrzeugbusmodul 90B wiederum ist ein Steuergerät für ein Fahrstabilitätsprogramm des Kraftfahrzeugs 80. Das Kraftfahrzeugbusmodul 90A steuert beispielsweise eine Beleuchtungseinrichtung 87 des Kraftfahrzeugs 80 sowie eine Abstandsmesseinrichtung 88 für einen Heckbereich bzw. einen Bewegungsraum hinter dem Kraftfahrzeug 80 (in Fahrtrichtung hinten) an. Beispielsweise umfasst die Beleuchtungseinrichtung 87 Bremsleuchten, Heck-Fahrbeleuchtungseinrichtungen, Rückfahrscheinwerfer, Blinkleuchten oder dergleichen. Die Abstandsmesseinrichtung 88 weist beispielsweise berührungslos arbeitende Abstandssensoren, insbesondere Ultraschallsensoren, auf. Ein Prozessor 93 eines jeweiligen Kraftfahrzeugbusmoduls 90A - 90C führt eines oder mehrere Steuerungsprogramme aus, um die jeweilige Funktionalität des Kraftfahrzeugbusmoduls 90A - 90C zu realisieren, beispielsweise eine Fahrstabilisierung, eine Motorsteuerung des Motors 82 oder dergleichen.

Die Anhängersteckdose 19 sowie die Antriebe 17, 18 sind über die Leitungsanordnung 20 mit einem Steuergerät 30 verbunden. In Figur 2 ist dies bezüglich der Anhängersteckdose 19 lediglich durch einen Doppelpfeil angedeutet. Das Steuergerät 30 steuert über die Leitungsanordnung 20 die Funktionen der Anhängekupplung 10 an, beispielsweise die jeweiligen Anschlusskontakte der Anhängersteckdose 19 und/oder den Antrieb 17 und/oder den Antrieb 18. So kann beispielsweise anhand des Steuergeräts 30 der Antrieb 17 zum Lösen der Fixiereinrichtung 16 und der Antrieb 18 zum Schwenken oder Verstellen des Kupplungsarms 14 zu einer Bewegung aus der Gebrauchsstellung G heraus, vorzugsweise auch zu einer Bewegung aus der Nichtgebrauchsstellung N heraus, angesteuert werden.

Ein zum Betreiben der Antriebe 17, 18 geeigneter Ausgang, beispielsweise eine elektronische Endstufe und/oder Leistungselektronik, ist z.B. an einer Steuer-Schnittstelle 31 vorgesehen.

Eine Schnittstelle 32 ist für die Anhängersteckdose 19 vorgesehen. Die Schnittstelle 32 bildet ein Koppelmittel zur Ankopplung der Anhängersteckdose 19.

Das Steuergerät 30 weist einen Prozessor 33 auf, der mit einem Speicher 34 kommuniziert. In dem Speicher 34 ist ein Funktionssoftwaremodul 38, beispielsweise ein Steuerungsprogramm, zur Steuerung und/Überwachung der Anhängekupplung 10, sowie ein Funktionssoftwaremodul 39, z.B. ein Kommunikationsprogramm, gespeichert, deren Programmcode von dem Prozessor 33 ausgeführt werden kann. Der Speicher 34 ist vorteilhaft ein nicht flüchtiger Speicher beispielsweise ein sogenannter Flash-Speicher, ein EPROM oder EEPROM. Der Prozessor 33 kann Zugriff auf flüchtigen Speicher 34A haben, beispielsweise ein RAM (=Random-Access Memory), um dort temporär Daten abzulegen.

Das Steuergerät 30 kann über eine Busschnittstelle 36 digital Daten auf dem Datenbus 85 senden oder empfangen. Dazu wird noch näheres erläutert.

Das Steuergerät 30 kommuniziert über den Datenbus 85 mit den Kraftfahrzeugbusmodulen 90A - 90C beispielsweise derart, dass es den aktuellen Betriebsstatus der Anhängekupplung 10 auf dem Datenbus 85 meldet. Wenn also beispielsweise die Anhängersteckdose 19 belegt ist, der Steckverbinder 185 eingesteckt ist, meldet dies das Steuergerät 30 auf dem Datenbus 85 an die Kraftfahrzeugbusmodule 90A - 90C. In diesem Fall wird beispielsweise das für die Fahrstabilisierung des Kraftfahrzeugs 80 zuständige Kraftfahrzeugbusmodul 90B eine andere Betriebsweise auswählen als dann, wenn kein Anhänger 180 an das Kraftfahrzeug 80 angekoppelt ist. Ebenfalls reagiert beispielsweise das Motorsteuergerät oder Kraftfahrzeugbusmodul 90C bei Anhängerbetrieb anders, indem es beispielsweise andere Lastprogramme oder Ansteuerungsprogramme zur Ansteuerung des Motors 82 betreibt.

Das Funktionssoftwaremodul 38 steuert beispielsweise die Funktionen der Anhängersteckdose 19 an derart, dass die Beleuchtungseinrichtung 186 des Anhängers 180 synchron mit der Beleuchtungseinrichtung 87 des Kraftfahrzeugs 80 arbeitet, d.h. dass beispielsweise auf derselben Seite Blinkleuchten 87A des Kraftfahrzeugs 80 und Blinkleuchten 186A des Anhängers 180 aktiviert werden, die Bremsleuchten aktiviert werden und dergleichen.

Das Funktionssoftwaremodul 38 steuert einen oder beide der Antriebe 17, 18 an.

So kann beispielsweise dann, wenn das Kraftfahrzeug 80 fährt, beispielweise eine Mindestgeschwindigkeit überschritten ist, die Funktion des Antriebs 17 und die Funktion des Antriebs 18 deaktiviert sein. Somit kann beispielsweise der Kupplungsarm 14 beim Fahrbetrieb des Kraftfahrzeugs 80 nicht zwischen der Gebrauchsstellung G und der Nichtgebrauchsstellung N verstellt werden. Somit reagiert also auch das Steuergerät 30 mit seinem Steuerungsprogram 38 auf den jeweiligen Betriebszustand des Kraftfahrzeugs 80.

Das Funktionssoftwaremodul 38 ist weiterhin mit einem Sensor 21 der Anhängekupplung 10 verbunden. Der Sensor 21 umfasst beispielsweise einen Schwenkwinkel des Anhängers 180 relativ zum Kraftfahrzeug 80. Der Sensor 21 ist beispielsweise an die Schnittstelle 32 über die Leitungsanordnung 20 angeschlossen oder anschließbar.

Die Antriebe 17, 18, die Anhängersteckdose 19 sowie der Sensor 21 bilden Funktionsbauteile 22, mit denen das Steuergerät 30 zusammenwirkt und in deren Zusammenhang das Steuergerät 30 bei Ausführung des Programmcodes des Funktionssoftwaremoduls 38 Ansteuerungsfunktionen und/oder Erfassungsfunktionen leistet.

Das Funktionssoftwaremodul 38 ist ferner zur Ansteuerung von Ausgabemitteln 44, beispielsweise optischen und/oder akustischen Ausgabemitteln, ausgestaltet.

Das oder die Ausgabemittel 44 umfassen beispielsweise Leuchtmittel, insbesondere mindestens eine LED, einen Lautsprecher oder dergleichen.

Weiterhin ist eine Schnittstelle 37 für elektrisch anzuschließende Bauteile, die nicht unmittelbar Bestandteil der Anhängekupplung 10 sind, vorgesehen. An die Schnittstelle 37 kann beispielsweise als elektrisches Bauteil 45 ein Bedienelement 45A, z.B. ein Bedienschalter, insbesondere ein Tastschalter, angeschlossen sein.

Durch ein Betätigen des Bedienelements 45 ist beispielsweise das Steuergerät 30 zur Ansteuerung der Antriebe 17, 18 für eine Betätigung aus der Gebrauchsstellung G in Richtung der Nichtgebrauchsstellung N oder umgekehrt ausgestaltet. Mithin kann also ein Bediener beispielsweise an dem Bauteil 45 oder dem Bedienelement 45A, Schaltbefehle geben.

Ohne weiteres ist aber auch eine drahtlose Bedienung möglich, beispielsweise anhand einer Fernbedienung 48, die über eine Drahtlosschnittstelle 49, beispielsweise eine Bluetooth-Schnittstelle, mit dem Steuergerät 30 kommunizieren kann. Anhand der Fernbedienung 48 ist beispielsweise analog zum elektrischen Bauteil 45 oder Bedienelement 45A eine Ansteuerung des Steuergeräts 30 möglich.

Ferner ist aber auch eine Ansteuerung über die Busschnittstelle 36 beispielsweise aus dem Cockpit des Kraftfahrzeugs 80 möglich, so dass der Nutzer des Kraftfahrzeugs 80 beispielsweise auf dem Fahrersitz sitzend das Steuergerät 30 zur Betätigung eines oder beider Antriebe 17 oder 18 ansteuern kann.

Somit stellen die Schnittstelle 37, die Drahtlosschnittstelle 49 sowie die Busschnittstelle 36 jeweils einen Steuereingang 57 dar, über den ein Steuersignal SA sendbar ist, mit dem das Steuergerät 30 zum Ansteuerung des Kupplungsarm-Antriebs 18 und/oder des Fixier-Antriebs 17 im Sinne eines Verlassens der Gebrauchsstellung G oder der Nichtgebrauchsstellung N oder des Verstellens in Richtung der Gebrauchsstellung G oder Nichtgebrauchsstellung N ansteuerbar ist.

Bevorzugt ist das Bedienelement 45A beleuchtet, beispielsweise anhand der Ausgabemittel 44. Dabei ist es vorteilhaft, wenn das Steuergerät 30 ein Leuchtmittel 44A normalerweise zum Leuchten mit einer geringeren Helligkeit ansteuert, sodass ein Auffinden des Bedienelements 45A leicht fällt. Demgegenüber steuert das Steuergerät 30 das Leuchtmittel 44A mit einer größeren Helligkeit beispielsweise zur Ausgabe von Warnmeldungen, Statusmeldungen oder dergleichen an.

Des Weiteren sind Anschlüsse 46, 47 zur Stromversorgung des Steuergeräts 30 an demselben vorgesehen. An den Anschlüssen 46, 47 stellt das Kraftfahrzeug 80 beispielsweise eine Versorgungsspannung U bereit.

Prinzipiell wäre es möglich, dass die Funktionssoftwaremodule 38, 39 sozusagen speziell für das Steuergerät 30 hergestellt sind, d.h. dass beispielsweise Mindestspannungswerte und Maximalspannungswerte für die Versorgungsspannung U bei den Funktionssoftwaremodulen 38, 39 fest einprogrammiert sind. Dann ist aber das Steuergerät 30 nur eingeschränkt verwendbar, nämlich mit Anhängekupplungen des gleichen Typs wie die Anhängekupplung 10 und/oder mit Kraftfahrzeugen des gleichen Typs wie das Kraftfahrzeug 80, jedenfalls solchen Kraftfahrzeugen, die dieselben typischen Versorgungsspannungen U bereitstellen. Hier schafft die Erfindung Abhilfe.

Die Funktionssoftwaremodule 38, 39 sind sozusagen parametrierbar oder konfigurierbar, nämlich mit Funktionsparametern 41 bis 43. Die Funktionsparameter 41 und 42 gehören beispielsweise zu einem Parametersatz 40, mit dem das Funktionssoftwaremodul 38 programmierbar ist. Das Steuergerät 30 hat beispielsweise eine Parametrierschnittstelle 35 zum Empfang von Funktionsparametern, beispielsweise des Parametersatzes 40.

Die Funktionsparameter 41 bis 43 stehen nur beispielhaft für verschiedenartige Funktionsparameter, die durch Funktionssoftwaremodule verarbeitbar sind und, was nachfolgend deutlicher wird, beispielsweise durch eine Bereitstellungseinrichtung 100 für das Steuergerät 30 bereitstellbar sind. Die Bereitstellungseinrichtung 100 umfasst beispielsweise einen Personal-Computer, ein Notebook oder dergleichen.

Die Bereitstellungseinrichtung 100 weist einen Prozessor 103 sowie einen Speicher 104 auf. Anhand von Eingabemitteln 105, beispielsweise einer Tastatur, kann ein Bediener einen Eingangsdatensatz 107, zum Beispiel eine Eingangstabelle, mit Parameterwerten für die Funktionsparameter 41 bis 43 vorgeben. Der Prozessor 103 kann den Programmcode eines Extern-Prüfungsmoduls 102 ausführen und beispielsweise an Ausgabemitteln 106 der Bereitstellungseinrichtung 100 ausgeben, ob der Eingangsdatensatz 107 gültige Parameterwerte enthält. Das Extern-Prüfmodul 102 bildet eine Prüfeinrichtung 100 zur Überprüfung von Parameterwerten der Funktionsparameter 41 bis 43.

Wenn der Eingangsdatensatz 107 für die Funktionsparameter 41 bis 43 zulässige Parameterwerte enthält, d.h. Parameterwerte, mit denen die Funktionssoftwaremodule 38, 39 ordnungsgemäß arbeiten können, erzeugt die Bereitstellungseinrichtung 100 den Parametersatz 40, der die Funktionsparameter 41 bis 43 enthält sowie vorteilhaft weitere Funktionsparameter.

Vorteilhaft ist es, wenn die Bereitstellungseinrichtung 100 dem Parametersatz 40 noch eine Überprüfungsinformation 108 hinzufügt, anhand derer beispielsweise die Funktionssoftwaremodule 38, 39 oder die nachfolgend erläuterte Prüfeinrichtung 51, ermitteln können, dass der Parametersatz 40 ein überprüfter und geeigneter Parametersatz ist.

Vorteilhaft ist eine sozusagen eingangsseitige Parameterprüfung bei dem Steuergerät 30 vorgesehen. Als Prüfeinrichtung 51 dient ein Steuergerät-Prüfmodul 50, dessen Programmcode vom Prozessor 33 ausführbar ist. Das Steuergerät-Prüfmodul 50 überprüft den Parametersatz 40 dahingehend, dass seine Parameterwerte zulässige Parameterwerte für die jeweiligen Funktionsparameter 41 bis 43 zulässig sind. An dieser Stelle sei noch erwähnt, dass der Parametersatz 40 vorteilhaft für mindestens einen, vorzugsweise jeden, Funktionsparameter 41 bis 43 dessen Namen sowie dessen Parameterwert enthält.

Das Steuergerät-Prüfmodul 50 kann unabhängig von dem Extern-Prüfmodul 102 oder zusätzlich zu diesem vorgesehen sein. Das Steuergerät-Prüfmodul 50 kann einen Bestandteil beispielsweise eines oder beider Funktionssoftwaremodule 38, 39 bilden. Das Steuergerät-Prüfmodul 50 überprüft den Parametersatz 40 auf gültige Parameterwerte, d.h. dass beispielsweise ein Parameterwert für den Funktionsparameter 41 innerhalb eines vorbestimmten und vorab als zulässig geprüften Wertebereiches ist.

Die Funktionssoftwaremodule 38, 39 sind nämlich dahingehend überprüft, dass sie bei zulässigen Parameterwerten für die Funktionsparameter 41 bis 43 ordnungsgemäß und/oder sicher funktionieren.

Beispielsweise definiert der Funktionsparameter 41 eine Unterspannungsgrenze Umin für die Versorgungsspannung UV. Die Versorgungsspannung UV darf nicht unterhalb eines Parameterwerts Umin1 der Unterspannungsgrenze Umin sein, damit das Steuergerät 30 ordnungsgemäß arbeitet. Beispielsweise ist der Parameterwert Umin1 für den Funktionsparameter 41, also die Unterspannungsgrenze Umin, auf einen Wert von 10 V eingestellt. Wenn nun an den Anschlüssen 46, 47 eine größere Versorgungsspannung UV als die Unterspannungsgrenze Umin vorliegt, arbeitet das Steuerungsprogramm 38 ordnungsgemäß. Ansonsten gibt es an den Ausgabemitteln 44 beispielsweise eine Fehlermeldung aus, lässt z.B. eine Leuchtdiode leuchten. Es muss allerdings sichergestellt sein, dass das Steuerungsprogramm 38 die Unterspannungsgrenze zuverlässig erkennt, d.h. eine Unterspannung, die unterhalb der Unterspannungsgrenze Umin, die durch den Funktionsparameter 41 vorgegeben ist, liegt, erkennt.

Dazu ist das Funktionssoftwaremodul 38 sozusagen mit dem Parameterwert Umin1 für die Unterspannungsgrenze Umin geprüft. Beispielsweise wird eine Unterspannungsgrenze von 10 V als Parameterwert Umin1 des Funktionsparameters 41 vorgegeben.

Grundsätzlich möglich ist es aber auch, dass die Prüfeinrichtung 51 den Parameterwert des Funktionsparameters 41 auf einen gültigen Wert ändert, beispielsweise auf eine gültige Unterspannungsgrenze von beispielsweise 12 V.

Weiterhin ist es möglich, dass die Prüfeinrichtung 51 den Parameterwert des Funktionsparameters 41 im Zusammenhang und/oder in Wechselwirkung mit dem Parameterwert eines anderen Funktionsparameters überprüft, beispielsweise eines Funktionsparameters 41A, der einen maximalen Strom zur Bestromung eines der Antriebe 17 oder 18 definiert. Wenn der Funktionsparameter 41 eine niedrige Minimalspannung definiert, andererseits der durch den Funktionsparameter 41A definierte maximale Strom zu niedrig ist, um bei einer niedrigen Spannung gemäß Funktionsparameter 41 einen zuverlässigen Betrieb des Antriebs 17 oder 18 zu gewährleisten, erkennt die Prüfeinrichtung 51 mindestens einen der Funktionsparameter 41 oder 41A als unzulässig. Man sieht an diesem Beispiel, dass beispielsweise bei einem größeren Parameterwert des Funktionsparameters 41, also einer höheren minimalen Spannung, der maximale Strom gemäß dem Funktionsparameter 41A ausreichen würde. In diesem Fall würde die Prüfeinrichtung 51 beide Funktionsparameter 41 und 41A als zulässig qualifizieren.

Eine Testeinrichtung 200 ist mit den Anschlüssen 46, 47 elektrisch verbunden und stellt an diesen unterschiedliche Versorgungsspannungen UV bereit, die oberhalb und unterhalb der Unterspannungsgrenze Umin, die als Funktionsparameter 41 vorgegeben ist, liegen, zum Beispiel als Testspannung Utest. Nur dann, wenn die Unterspannungsgrenze Umin nicht unterschritten ist, darf das Steuergerät 30 beispielsweise die Antriebe 17 oder 18 antreiben. Bei zu kleinen Spannungen besteht eine Fehlergefahr, d.h. dass die Antriebe 17, 18 nicht mehr ordnungsgemäß betätigt werden können. In diesem Fall muss das Funktionssoftwaremodul oder Steuerungsprogramm 38 eine Fehlermeldung ausgeben.

Der Parameterwert 10 V ist also beispielswiese ein erster Parameterwert Umin1, der als Vorgabewert für den Funktionsparameterwert gültig ist. Zum Testen des Parameterwerts Umin1 stellt die Testeinrichtung 200 an ihren mit den Anschlüssen 46, 47 verbundenen Anschlüssen eine veränderliche Versorgungsspannung Utest bereit, die beispielsweise zunächst 11 V beträgt und dann inkrementell oder schrittweise, beispielsweise in 0,1-V-Schritten, über die Zeit t verringert wird, bis sie den Parameterwert Umin1 unterschreitet. Dann jedenfalls dürften die Antriebe 17, 18 nicht mehr betätigbar sein. Diese Testroutine ist eine sogenannte Hardware-in-the-Loop-Testroutine bzw. der Test wird als Hardware-in-the-Loop-Test bezeichnet.

Auch der nachfolgende Test ist ein Hardwaretest dieser Art, wobei jedoch in diesem Fall beispielsweise der Funktionsparameter 41 variiert wird, während die Versorgungsspannung UV fest auf einen Wert Utest eingestellt ist. Wenn also der Parameterwert Umin für den Funktionsparameter 41 13 V beträgt, müssen die Antriebe 17, 18 ansteuerbar sein. Eine Testmethode kann dabei vorsehen, dass beispielsweise der Parameterwert für den Funktionsparameter 41 zunächst unterhalb, insbesondere deutlich unterhalb, der Versorgungsspannung Utest eingestellt wird, z. B. auf 8V, und dann vergrößert wird. Dazu kann beispielsweise die Bereitstellungseinrichtung 100 nacheinander jeweils größere Funktionsparameterwerte Umintest für den Funktionsparameter 41 vorgeben, beispielsweise anfänglich 8V, 10 V oder dergleichen, und dann schrittweise, zum Beispiel in 0,1 V-Schritten, größere Parameterwerte. Auch dies ist ein inkrementeller Test oder Veränderungstest.

Man erkennt, dass diese Tests sehr aufwändig und zeitraubend sind, auf der anderen Seite aber auch sicherstellen, dass das Steuergerät 30 zuverlässig funktioniert.

Auf die vorgenannte Weise werden also zulässige Parameterwerte für die Funktionsparameter 41, 43 ermittelt, die dann, beispielsweise anhand des Eingangsdatensatzes 107, vorgegeben werden können. Die Prüfeinrichtungen 101 und 51 stellen sicher, dass die über den Eingangsdatensatz 107 vorgegebenen Parameterwerte zulässig sind, also im Rahmen der vorgenannten Tests überprüfte Parameter sind.

Auch ein Softwaretest, d.h. ein Test der Funktionssoftwaremodule 38, 39, ist vorteilhaft bereits für mindestens einen Parameterwert eines Funktionsparameters, vorzugsweise alle für einen Funktionsparameter zulässige Parameterwerte, erfolgt. Dabei werden beispielsweise einzelne Funktionen des Steuerungsprogramms des Softwaremoduls 38, beispielsweise Funktionen zur Ansteuerung des Antriebs 17 getrennt von den Funktionen zur Ansteuerung des Antriebs 18 geprüft. Beispielsweise werden Stromgrenzen, die vom Antrieb 17 oder 18 nicht überschritten werden dürfen, als Funktionsparameter vorgegeben. Dabei werden softwareseitige Eingangsgrößen mit softwareseitigen Ausgangsgrößen verglichen und nur dann, wenn korrekte Ergebnisse vorliegen, der jeweilige Softwareteil oder die Teilfunktion der Software als geprüft freigegeben. Einen derartigen Test bezeichnet man als Software-in-the-Loop-Test. Dabei ist es auch möglich, dass Parameterwerte für die Funktionsparameter variiert werden und auf diesem Weg sichergestellt wird, dass der jeweilige Softwareteil in der Lage ist, mit dem Funktionsparameter ordnungsgemäß zu arbeiten.

Mit dem Funktionsparameter 42 kann beispielsweise eine Ansteuerung der Ausgabemittel 44 vorgegeben werden. Wenn also beispielsweise der Kupplungsarm 14 zwischen der Gebrauchsstellung G und der Nichtgebrauchsstellung N durch den Kupplungsarm-Antrieb 18 angetrieben wird, geben die Ausgabemittel 44 eine Information, beispielsweise eine optische und/oder akustische Information, aus. Mit dem Funktionsparameter 42 kann beispielsweise eine Leuchtfrequenz einer Leuchtdiode der Ausgabemittel 44 eingestellt werden. Auch in diesem Zusammenhang ist eine Überprüfung des jeweiligen Parameterwerts für den Funktionsparameters 42 vorteilhaft. Wenn der Parameterwert beispielsweise eine zu kleine Frequenz für ein Blinken der Leuchtdiode vorgeben würde, wird dieser Parameterwert von den Prüfeinrichtungen 51 und/oder 101 als ungültig erkannt.

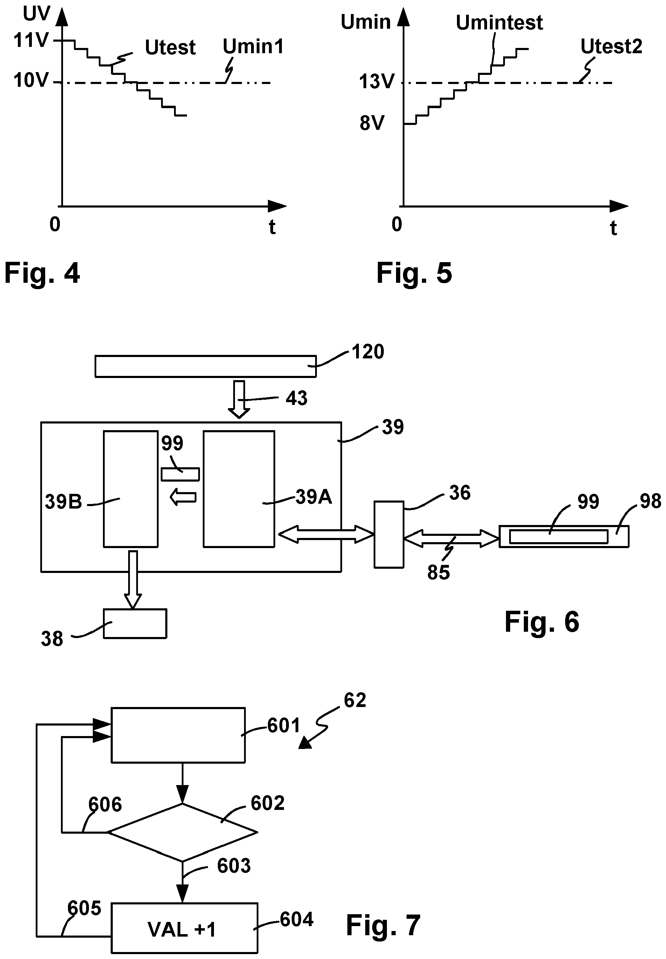

So sind beispielsweise Frequenzen aus einem Frequenzbereich als Parameterwert für den Funktionsparameter 42 auswählbar, für die das Steuergerät 30 und/oder das Funktionssoftwaremodul 38 anhand eines Tests in der Art des vorgenannten Tests geprüft ist. Beispielsweise können Parameterwerte für die jeweilige Frequenz anhand eines Tests in der Art des im Zusammenhang mit Figur 5 erläuterten Tests geprüft werden, indem nämlich die Bereitstellungseinrichtung 100 unterschiedliche Parameterwerte für den Funktionsparameter 42 mit den entsprechenden Frequenzen aus dem zu testenden Frequenzbereich vorgibt und dabei überprüft wird, ob die Ausgabemittel 44 mit einem jeweiligen Frequenzwert für den Funktionsparameter ordnungsgemäß funktionieren, also beispielsweise die optische oder akustische Information korrekt ausgegeben wird.

Mit dem Funktionsparameter 43 kann beispielsweise die Buskommunikation auf dem Datenbus 85 beeinflussbar sein. Ein Softwaretest des Funktionssoftwaremoduls 39, dem Kommunikationsprogramm, insbesondere eine Überprüfung von Parameterwerten des Funktionsparameters 43 im Zusammenhang mit dem Funktionssoftwaremodul 39, ist vorteilhaft. So kann beispielsweise durch einen Parameterwert für den Funktionsparameter 43 definiert werden, ob eine Busnachricht 98, die eine Geschwindigkeitsinformation 99 des Kraftfahrzeugs 80 enthält, vom Funktionssoftwaremodul 39 empfangen und an das Funktionssoftwaremodul 38 übermittelt wird oder vom Funktionssoftwaremodul 39 ignoriert oder verworfen wird.

Beispielsweise ist, insbesondere in einer Software-Testumgebung, ein Testprogramm 120 vorgesehen, welches verschiedene Parameterwerte für den Funktionsparameter 43 an das Kommunikationsprogramm oder Funktionssoftwaremodul 39 übergibt, siehe dazu Figur 6. Eine Teilfunktion 39A des Funktionssoftwaremoduls 39 ist mit der Busschnittstelle 36 verbunden und bedient dieselbe.

Wenn der Parameterwert für den Funktionsparameter 43 definiert, dass die Geschwindigkeitsinformation 99 aus der Busnachricht 98 auszulesen und an das Funktionssoftwaremodul 38 zu übergeben ist, gibt die Teilfunktion 39A die Geschwindigkeitsinformation 99 oder einen daraus generierten Geschwindigkeitswert an eine Teilfunktion 39B weiter, welche die Geschwindigkeitsinformation 99 oder den Geschwindigkeitswert an das Funktionssoftwaremodul 38 übermittelt.

Wenn jedoch der Parameterwert für den Funktionsparameter 43 definiert, dass die Busnachricht 98 bzw. Geschwindigkeitsinformation 99 zu ignorieren ist, wird durch den Test überprüft, ob die Teilfunktion 39A die Geschwindigkeitsinformation 99 wie erwartet nicht an die Teilfunktion 39B weitergibt oder eben doch an die Teilfunktion 39B weitergibt, was als Fehler erkannt wird.

Der vorgenannte Test überprüft das Funktionssoftwaremodul 39 als Ganzes. Es ist aber auch möglich, dass das Testprogramm 120 nur die Teilfunktion 39A überprüft, die dann in einer sozusagen isolierten Testumgebung geprüft wird. Die allein und isoliert getestete Teilfunktion 39A muss nämlich in Abhängigkeit vom eingestellten Parameterwert für den Funktionsparameter 43 als Übergabewert oder Rückgabewert die Geschwindigkeitsinformation 99 oder einen daraus generierten Geschwindigkeitswert ausgeben, wobei der Übergabewert oder Rückgabewert den Eingangswert für die Teilfunktion 39B bildet.

Zur Ansteuerung des Kupplungsarm-Antriebs 18 dienen Steuermittel 59 des Funktionssoftwaremoduls 38, beispielsweise eine entsprechende Steuerungsfunktion, deren Programmcode vom Prozessor 33 ausführbar ist.

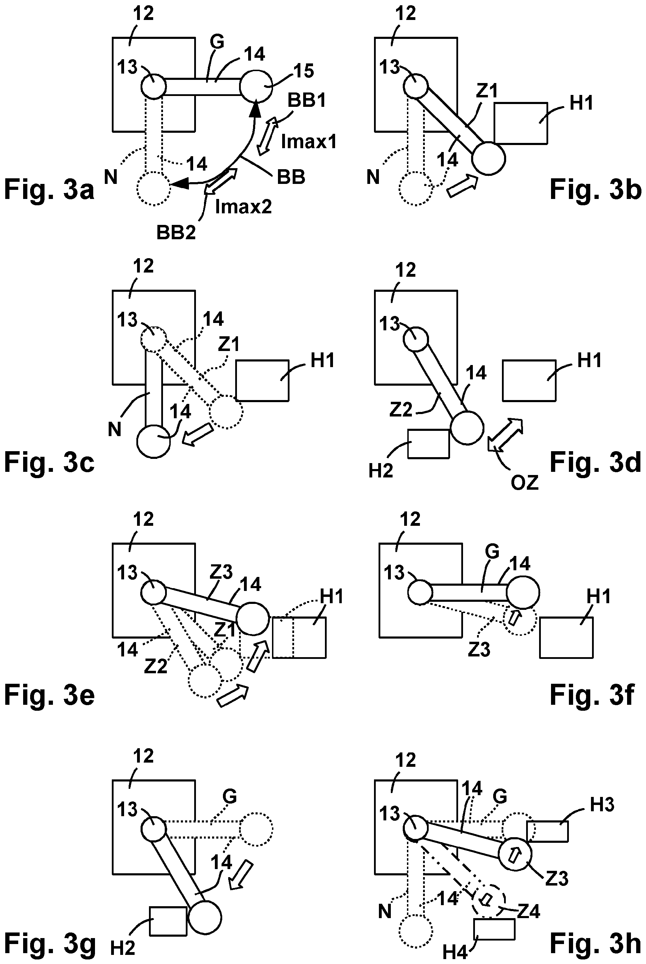

Wenn das Steuergerät 30 an einem der Steuereingänge 57 einen Schaltbefehl SA zum Verstellen des Kupplungsarms 14 zwischen der Gebrauchsstellung G und der Nichtgebrauchsstellung N erhält, steuert es die Antriebe 17, 18 entsprechend an, und löst beispielsweise zunächst eine Fixierung des Kupplungsarms 14 mit dem Antrieb 17 und schwenkt oder verstellt anschließend den Kupplungsarm 14 anhand des Antriebs 18, um nach Abschluss der Verstellbewegung in der jeweils erreichten Gebrauchsstellung G oder Nichtgebrauchsstellung N wieder die Fixiereinrichtung 16 zur Fixierung des Kupplungsarms 14 anzusteuern. Schematisch ist diese Bewegungsfolge in Figur 3a angedeutet.

Nun kann sich aber auf der Bewegungsbahn BB zwischen der Nichtgebrauchsstellung N und der Gebrauchsstellung G ein Hindernis H1 befinden. Dann schlägt der Kupplungsarm 14 an das Hindernis H1 an und erreicht nur eine der Gebrauchsstellung G vorgelagerte Zwischenstellung Z1.

Das Steuergerät 30 weist Hinderniserkennungsmittel 58 auf, um ein Anschlagen des Kupplungsarms 14 an einem Hindernis zu erkennen.

Die Hinderniserkennungsmittel 58 umfassen beispielsweise eine Stromesseinrichtung, insbesondere einen Stromsensor 56, sowie einen Bewegungssignaleingang 55, z.B. an der Schnittstelle 31, sowie eine Softwarefunktion oder Teilfunktion des Steuerungsprogramms 38, welche Informationen des Stromsensors 56 sowie die am Bewegungssignaleingang 55 erhaltenen Informationen auswertet, um daran zu erkennen, ob der Kupplungsarm 14 an einem Hindernis anschlägt oder nicht.

Der Stromsensor 56 und/oder der Bewegungssignaleingang 55 und/oder der Bewegungssensor 23 bilden Bestandteile einer Sensoranordnung 24, die bezüglich des Stromsensors 56 des Bewegungssignaleingangs 55 einen Bestandteil des Steuergeräts 30 bilden, hinsichtlich des Bewegungssensors 23 ein Bestandteil der Anhängekupplung 10. Der Stromsensor 56 umfasst beispielsweise einen Messwiderstand.

Der Bewegungssignaleingang 55 ist zum Empfang eines Bewegungssignals BS eines Bewegungssensors 23, z.B. eines Drehsensor, insbesondere eines Hall-Sensors, des Kupplungsarm-Antriebs 18 ausgestaltet. Der Bewegungssensor 23 gibt beispielsweise ein Impulssignal aus, welches mit der Drehbewegung des Antriebs 18 korreliert und somit eine jeweilige Stellung des Antriebs 18 signalisiert. Wenn sich also der Antrieb 18 drehen und den Kupplungsarm 14 entsprechend verstellen kann, empfängt das Steuergerät 30 am Bewegungssignaleingang 55 das Bewegungssignal BS als eine Impulsfolge. Wenn jedoch der Kupplungsarm 14 sich nicht mehr bewegen oder drehen kann, beispielsweise an einem Hindernis anschlägt, wechselt das Signalniveau des Bewegungssignals BS nicht mehr.

Wenn also beispielsweise der Kupplungsarm 14 an dem Hindernis H1 anschlägt (Figur 3b), steigt ein Stromfluss durch den Kupplungsarm-Antrieb 18, beispielsweise dessen Elektromotor, an, was anhand des Stromsensors 56 erkennbar ist. Zudem zeigt das Bewegungssignal BS, dass sich der Antrieb 18 und somit der Kupplungsarm 14 nicht mehr bewegen, der Kupplungsarm 14 also beispielsweise eine Zwischenstellung Z1 einnimmt. Eine entsprechende Softwareroutine des Funktionssoftwaremoduls 38, welche einen Bestandteil der Steuermittel 59 oder der Hinderniserkennungsmittel 58 bildet, erkennt somit den Stillstand des Kupplungsarms 14.

Wenn der Kupplungsarm 14 an einem Hindernis bei seiner Bewegung aus der Gebrauchsstellung G in die Nichtgebrauchsstellung N oder umgekehrt anschlägt, also beispielsweise gemäß der Situation gemäß Figur 3b, steuern die Steuermittel 59 regelmäßig oder in einem Normalbetrieb den Kupplungsarm-Antrieb 18 im Sinne einer Bewegung des Kupplungsarms 14 in die Ausgangsstellung zurück, im vorliegenden Fall also in Richtung der Nichtgebrauchsstellung N, von der aus gemäß Figur 3a, 3b der Kupplungsarm 14 heraus bewegt worden ist. Das ist in Figur 3c angedeutet.

Nun kann aber die Situation gemäß Figur 3d auftreten, dass nämlich der Kupplungsarm 14 nicht mehr in die Ausgangsstellung zurückverstellbar ist, weil er an einem Hindernis H2 anschlägt und dann eine Zwischenstellung Z2 einnimmt. Wiederum steigt der Strom durch den Antriebsmotor des Kupplungsarm-Antriebs 18 an und zeigt das Bewegungssignal BS an, dass sich der Kupplungsarm 14 nicht mehr bewegt, was durch die Hinderniserkennungsmittel 58 als ein Anschlagen des Kupplungsarms 14 an einem Hindernis erkannt wird.

Nun kann ein Szenario vorsehen, dass die Steuermittel 59 den Kupplungsarm-Antrieb 18 zum Anhalten in der Zwischenposition Z2 ansteuern. Die Steuermittel lassen den Kupplungsarm 14 in der Zwischenposition Z2 sozusagen stehen. Der Bediener hat dann Gelegenheit, beispielsweise das Hindernis H2 aus dem Weg zu räumen.

Nach dem Anhalten ist es möglich, dass ein weiteres Steuersignal SA erforderlich ist, damit die Steuermittel 59 den Kupplungsarm-Antrieb 18 zum weiteren Verstellen des Kupplungsarms 14 an dem Ort des Hindernisses H2 vorbei ansteuern.

Nach dem Anhalten kann aber auch vorgesehen sein, dass die Steuermittel 59 nach einer vorbestimmten Wartezeit dann den Kupplungsarm-Antrieb 18 dann weiter im Sinne eines Überwindens des Hindernisses H2 und/oder in Richtung der Ausgangsstellung ansteuern, hier also der Nichtgebrauchsstellung N, ohne dass ein weiteres Steuersignal SA erforderlich ist und/oder von den Steuermitteln 59 ausgewertet wird, ähnlich wie in Figur 3c angedeutet.

Ein anderes Szenario sieht vor, dass die Steuermittel 59 den Kupplungsarm 14 ausgehend von der Zwischenstellung Z2 (Figur 3d) zu einer Bewegungsumkehr wieder in Richtung der Gebrauchsstellung G ansteuern, also auf das Hindernis H1 zu. Auch hierzu ist es vorteilhaft nicht erforderlich, dass ein weiteres Steuersignal SA gegeben wird, sondern dass die Steuermittel 59 sozusagen automatisch die vorgenannte Bewegung ansteuern. Es kann nämlich sein, dass nach dem erstmaligen Anschlagen am Hindernis H1 das Hindernis H1 entfernt worden ist und der Kupplungsarm 14 dann an dem Ort, wo das Hindernis H1 war, vorbei in Richtung der Gebrauchsstellung G bewegbar ist, siehe dazu beispielsweise Figuren 3e und 3f.

Möglich ist aber auch ein Szenario, dass das Hindernis H1 noch immer in der Bewegungsbahn BB von der Zwischenstellung Z2 zur Gebrauchsstellung G ist und der Kupplungsarm 14 am Hindernis H1 nochmals anschlägt. Dann ist es vorteilhaft, wenn die Steuermittel 59 den Kupplungsarm-Antrieb 18 wieder zu einer Bewegungsumkehr in Richtung des Hindernisses H2 oder der Nichtgebrauchsstellung N ansteuern, sodass der Kupplungsarm 14 vom Hindernis H1 weg bewegt wird. Es könne nämlich hier wiederum der Fall sein, dass das Hindernis H2 dann nicht mehr im Bewegungsweg oder der Bewegungsbahn BB zur Nichtgebrauchsstellung N ist, beispielsweise weil ein Bediener seinen Fuß, der ehemals das Hindernis H2 dargestellt hat, zwischenzeitlich aus der Bewegungsbahn BB des Kupplungsarms 14 entfernt hat.

Weiterhin möglich ist ein Szenario, dass die Steuermittel 59 den Kupplungsarm-Antrieb 18 zu einer oszillierenden Bewegung OZ des Kupplungsarms 14 zwischen den Hindernissen H1 und H2 ansteuern (angedeutet in Figur 3d). Dabei ist es möglich, dass diese Oszillationsbewegung OZ mehrfach durchgeführt wird, beispielsweise zweimal oder dreimal, sodass jede dieser Bewegungen sozusagen einen Versuch darstellt, dass jeweils im Weg befindliche Hindernis H1 oder H2 zu beseitigen oder zu überwinden. Möglich ist beispielsweise, dass der Kupplungsarm 14 an einem relativ weichen Hindernis H1 oder H2 anschlägt, zum Beispiel einem Gebüsch, einem Zweig oder dergleichen, und dieses Hindernis sozusagen nachgibt, wenn der Kupplungsarm 14 mehrfach versucht, an dem Hindernis vorbei zu kommen.

Die Figuren 3g-3h zeigen schematisch vergleichbare Bewegungsabläufe bei der Verstellbewegung des Kupplungsarms 14 aus der Gebrauchsstellung G in die Nichtgebrauchsstellung N. Auch hier ist es möglich, dass beispielsweise das Hindernis H2 in der Bewegungsbahn des Kupplungsarms 14 ist und die Steuermittel 59 den Kupplungsarm-Antrieb 18 zu einer Bewegungsumkehr in Richtung der Gebrauchsstellung G zurück ansteuern. Regelmäßig ist dabei vorgesehen, dass der Kupplungsarm 14 bis in die Gebrauchsstellung G hinein zurück verstellt wird und nicht in einer Zwischenposition stehen bleibt.

Möglich ist es aber auch, dass die Steuermittel 59 in der Situation gemäß Figur 3g den Kupplungsarm 14 sozusagen für eine vorbestimmte Wartezeit stehen lassen, den Kupplungsarm-Antrieb 18 also für eine vorbestimmte Zeit, beispielsweise wenige Sekunden, abschalten. Dann hat ein Bediener Gelegenheit, das Hindernis H2 aus dem Weg zu räumen. Sodann machen die Steuermittel 59 sozusagen einen weiteren Versuch, den Kupplungsarm 14 in die Nichtgebrauchstellung N zu verstellen, steuern also beispielsweise den Kupplungsarm-Antrieb 18 weiter im Sinne einer Bewegung in Richtung der Nichtgebrauchsstellung N an.

Figur 3h zeigt ein ähnliches Szenario wie Figur 3d, dass nämlich der Kupplungsarm 14 auf dem Bewegungsweg oder der Bewegungsbahn BB von der Gebrauchsstellung G in die Nichtgebrauchsstellung N an einem Hindernis H4 anschlägt und eine Zwischenposition Z4 einnimmt, was die Hinderniserkennungsmittel 58 erkennen. Sodann steuern die Steuermittel 59 den Kupplungsarm-Antrieb 18 zu einer Bewegungsumkehr in Richtung der Gebrauchsstellung G an, wo sich aber zwischenzeitlich ein weiteres Hindernis, beispielsweise ein Hindernis H3 befindet, sodass sich der Kupplungsarm 14 nur bis zu einer Zwischenposition Z3 bewegen lässt und am Hindernis H3 anschlägt. Auch in dieser Situation ist es möglich, dass die Steuermittel 59 den Kupplungsarm-Antrieb 18 zu einer Bewegungsumkehr ansteuern, sodass dieser ausgehend von der Zwischenposition Z3 den Kupplungsarm 14 in Richtung der Nichtgebrauchsstellung N bewegt. Diese Nichtgebrauchsstellung N erreicht der Kupplungsarm 14, wenn kein Hindernis H4 in seiner Bewegungsbahn ist. Ansonsten steuern die Steuermittel 59 den Kupplungsarm-Antrieb 18 wieder zu einer Bewegungsumkehr in Richtung der Gebrauchsstellung G an. Mithin ist also auch hier eine Oszillationsbewegung OZ vorhanden.

Durch Vorgabe eines entsprechenden Parameterwerts für einen Funktionsparameter, den die Steuermittel 59 auswerten, kann beispielsweise die Anzahl derartiger Oszillationsbewegungen OZ einstellbar sein.

Ebenfalls einstellbar kann sein, wie die Steuermittel 59 den Kupplungsarm-Antrieb 18 im Falle eines Hindernisses ansteuern, beispielsweise ob eine Wartezeit vor einem Versuch, das Hindernis zu überwinden, eingehalten wird, ob der Kupplungsarm 14 bei einem Hindernis regelmäßig zu einer Bewegungsumkehr in Richtung der Ausgangsstellung angesteuert wird oder nur für eine kurze Bewegung vom Hindernis weg. Diese Aufzählung ist nicht abschließend und vollständig.

Bevorzugt ist es, wenn die Hinderniserkennungsmittel 58 die Stromwerte des Stromsensors 56 in Abhängigkeit von der Versorgungsspannung UV auswerten. Bei niedriger Versorgungsspannung UV fließt nämlich zum Betreiben des Kupplungsarm-Antriebs 18 ein höherer Strom als bei höherer Versorgungsspannung UV. Mithin ist es also vorteilhaft, wenn die Hinderniserkennungsmittel 58 zu einer dynamischen Auswertung der Stromwerte des Stromsensors 56 ausgestaltet sind.

Bevorzugt ist es, wenn die Steuermittel 59 bei einem Loslaufen des Kupplungsarm-Antriebs 18 für eine vorbestimmte, insbesondere sehr kurze, Zeitspanne Stromwerte nicht analysieren, sodass die zum Loslaufen notwendigen Losbrechmomente aufgebracht werden können. Beispielsweise spielt es für eine Zeitspanne von wenigen 100 ms keine Rolle, welcher Strom durch den Kupplungsarm-Antrieb 18 fließt, wenn der Kupplungsarm 14 aus der Gebrauchsstellung G oder Nichtgebrauchsstellung N herausverstellt wird.

Möglich ist es auch, dass unterschiedlichen Bewegungsrichtungen des Kupplungsarms und/oder unterschiedlichen Abschnitten der Bewegungsbahn BB des Kupplungsarms zwischen der Gebrauchsstellung und der Nichtgebrauchsstellung unterschiedliche maximale Stromwerte für die Hinderniserkennung zugeordnet sind.

So können zwei oder weiteren Bewegungsabschnitten BB1, BB2 der Bewegungsbahn BB des Kupplungsarms 14 unterschiedliche Strom-Grenzwerte Imax1 und Imax2 zugeordnet sein, bei denen die Hinderniserkennungsmittel 58 das Anschlagen des Kupplungsarms 14 an ein Hindernis erkennen. So liegt beispielsweise der Bewegungsabschnitt BB1 im Wesentlichen in einem freien Bereich vor dem Stoßfänger 84 (hinter dem Kraftfahrzeug 80), der Bewegungsabschnitt BB2 hingegen im Wesentlichen im Bereich zwischen der Karosserie 81 und dem Stoßfänger 84. Auf dem Bewegungsabschnitt BB1 sind die Hinderniserkennungsmittel 58 vorzugsweise sensibler, z.B. weil in diesem freien Bereich der Bewegungsbahn BB die Wahrscheinlichkeit eines Hindernisses größer ist. Dementsprechend ist der Strom-Grenzwert Imax1 kleiner als der Strom-Grenzwert Imax2. Die Strom-Grenzwerte können beispielsweise als Parameterwerte für entsprechende Funktionsparameter, die die Hinderniserkennungsmittel 58 auswerten, im Speicher 34 gespeichert und/oder durch die Bereitstellungseinrichtung 100 bereitgestellt werden.

Es ist auch möglich, dass als Parameterwerte Faktoren hinterlegt sind, mit denen die entsprechenden Strom-Grenzwerte berechenbar sind, beispielsweise in Abhängigkeit vom zurückgelegten Weg des Kupplungsarms 14 entlang der Bewegungsbahn BB und/oder in Abhängigkeit von der Versorgungsspannung UV und/oder in Abhängigkeit von der Bewegungsrichtung des Kupplungsarms 14 von der Nichtgebrauchsstellung N in die Gebrauchsstellung G oder umgekehrt von der Gebrauchsstellung G in die Nichtgebrauchsstellung N. Weiteren Einflussfaktoren stellen beispielsweise auch die Gewichtskraft des Kupplungsarms 14 oder mechanische Widerstände eines Antriebs des Kupplungsarms 14, beispielsweise eines Getriebes, dar. Auch in Abhängigkeit von mechanischen Einflussfaktoren auf der Bewegungsbahn zwischen der Gebrauchsstellung G und der Nichtgebrauchstellung N kann ein jeweiliger Strom-Grenzwert dynamisch ermittelbar sein.

Auf einen Steuerbefehl SA hin, der beispielsweise am Bedienelement 45A, der Fernbedienung 48 oder über die Busschnittstelle 36 vom Steuergerät 30 empfangen wird, steuern die Steuermittel 59 regelmäßig die Antriebe 17, 18 zur Verstellung des Kupplungsarms 14 in die jeweils nachfolgende Gebrauchsstellung G oder Nichtgebrauchstellung N an, allerdings erst nach einer Überprüfung mindestens eines Zustands, vorzugsweise mehrerer Zustände, insbesondere des Kraftfahrzeugs 80.

Das Steuergerät 30 weist Zustandssignal-Eingänge 52, 53, 54 sowie 60 zur Erfassung von Zuständen des Kraftfahrzeugs 80 auf.

An den Zustandssignal-Eingängen 52 und 53 liegt das Zustandssignal 96 an, welches eine Betriebsbereitschaft des Kraftfahrzeugs 80 signalisiert, beispielsweise ob dessen Zündung für den Motor 82 eingeschaltet ist oder dergleichen. Das Zustandssignal 96 bildet also ein Betriebsbereitschaftssignal.

Am Zustandssignal-Eingang 54 liegt ein Zustandssignal 97 an, welches die Fahrgeschwindigkeit des Kraftfahrzeugs 80 signalisiert, somit also ein Geschwindigkeitssignal ist.

Am Zustandssignal-Eingang 60 liegt ein Zustandssignal 95 an, welches ein Öffnungssignal ist, das eine Offenstellung oder Verschlussstellung eines Karosserie-Verschlusselements des Kraftfahrzeugs 80, beispielsweise einer Heckklappe 89 desselben, signalisiert.

Ferner kann auch der Bewegungssignaleingang 55 ein Zustandssignal-Eingang sein und/oder der Validierungseinrichtung 61 zugeordnet sein. Wenn also das Bewegungssignal BS am Bewegungssignaleingang 55 eine Bewegung des Kupplungsarms 14 signalisiert, jedoch das Signal des Stromsensors 56 nicht damit korreliert, kann die Validierungseinrichtung 61 beispielsweise das Bewegungssignal BS als nicht valides oder ungültiges Signal qualifizieren.

Die Steuermittel 59 prüfen auf den Steuerbefehl SA hin, vor dessen und somit vor der Ansteuerung der Antriebe 17, 18, die Zustandssignale 95-97. Nur wenn beispielsweise die Heckklappe 89 offen ist, das Zustandssignal 96 signalisiert, dass die Zündung des Kraftfahrzeugs 80 aus ist oder das Kraftfahrzeug 80 jedenfalls nicht betriebsbereit ist und zudem das Zustandssignal 97 signalisiert, dass das Kraftfahrzeug 80 steht oder nicht mit mehr als mit einer vorbestimmten Maximalgeschwindigkeit fährt, geben die Steuermittel 59 die Ansteuerung des Antriebs 17 und/oder 18 frei. Die Steuermittel 59 führen also eine logische Verknüpfung beispielsweise der Zustandssignale 95 und 96, vorzugsweise mehrerer oder aller Zustandssignale 95-97, durch, um die Ansteuerung des Antriebs 17 und/oder 18 freizugeben. Ansonsten blockieren die Steuermittel 59 eine derartige Ansteuerung.

Es versteht sich, dass die vorgenannten Zustandssignale exemplarisch sind, d. h. dass eine Überprüfung beispielsweise nur des Zustandssignals 96 ausreichen kann oder dass weitere Zustände von den Steuermitteln 59 geprüft werden, beispielsweise die Geschwindigkeitsinformation 99 der Busnachricht 98 ausgewertet wird, um festzustellen, dass das Kraftfahrzeug 80 steht.

Wenn das Kraftfahrzeug 80 nicht betriebsbereit ist, also beispielsweise seine Zündung ausgeschaltet ist, hat das Zustandssignal 96 typischerweise den Wert logisch Null und/oder beträgt seine Spannung etwa null Volt. Wenn jedoch die Zündung eingeschaltet wird und/oder das Kraftfahrzeug 80 grundsätzlich fahrbereit ist, hat das Zustandssignal 96 einen vorbestimmten Mindestwert oder Signalpegel, beispielsweise logisch 1 oder einen entsprechenden analogen Wert, insbesondere Spannungswert.

Das Zustandssignal 96 hat aber auch dann den Wert logisch Null oder keinen Signalpegel oder nur einen geringen Signalpegel, wenn eine das Zustandssignal 96 bereitstellende und am Steuergerät 30 angeschlossene elektrische Leitung unterbrochen ist. Dann geht das Steuergerät 30 sozusagen irrtümlich davon aus, dass das Kraftfahrzeug 80 nicht fahrbereit ist. Die Steuermittel 59 könnten in dieser Situation eine Ansteuerung der Antriebe 17 und/oder 18 freigeben, auch wenn das Kraftfahrzeug 80 tatsächlich betriebsbereit ist und fährt.

Hier schafft eine Validierungseinrichtung 61 Abhilfe. Die Validierungseinrichtung 61 umfasst beispielsweise Programmcode des Funktionssoftwaremoduls 38 und/oder eine Teilfunktion des Funktionssoftwaremoduls 38, z.B. eine Validierungsfunktion 62.

Des Weiteren umfasst die Validierungseinrichtung 61 beispielsweise die Zustandssignal-Eingänge 52-54 sowie 60. Die Zustandssignal-Eingänge 52-54 sowie 60 sind beispielsweise am Prozessor 33 und/oder einem Analog-Digitalwandler (nicht dargestellt) des Steuergeräts 30 vorgesehen oder dergleichen. Der Prozessor 33 kann auch einen Analog-Digitalwandler aufweisen, beispielsweise am Zustandssignal-Eingang 52. Der Zustandssignal-Eingang 53 hingegen ist ein digitaler Eingang des Prozessors 33.

Das Zustandssignal 96 ist redundant auf beide Zustandssignal-Eingänge 52, 53 aufgeschaltet. Nur wenn an beiden Zustandssignal-Eingängen 52, 53 jeweils derselbe Eingangswert oder miteinander korrelierende Eingangswerte für das Zustandssignal 96 feststellbar sind, wird das Zustandssignal 96 grundsätzlich als gültig erkannt.

Allerdings ist für ein sozusagen gültiges oder valides Zustandssignal 96 notwendig, dass sich das Zustandssignal 96 innerhalb einer vorbestimmten Zeitspanne und/oder nach einer oder mehreren Betätigungen der Antriebe 17 und/oder 18 ändert. Typischerweise wird nämlich das Kraftfahrzeug 80 mindestens von Zeit zu Zeit bewegt, jedenfalls typischerweise häufiger, als die Anhängekupplung 10 zwischen der Gebrauchsstellung G und der Nichtgebrauchstellung N verstellt wird.

Beispielsweise führt der Prozessor 33 Programmcode der Validierungsfunktion 62 der Validierungseinrichtung 61 aus.

Die Validierungsfunktion 62 liest in einem Schritt 601 beispielsweise die jeweiligen Signalwerte an den Zustandssignal-Eingängen 52, 53 ein und überprüft, ob diese miteinander korrelieren. Es ist zum Beispiel möglich, dass die Validierungsfunktion 62 vom Prozessor 33 oder einem Betriebssystem 64 des Steuergeräts 30 immer dann, wenn sich das Zustandssignal 96 ändert, und/oder nach einer vorbestimmten Zeit sozusagen aufgeweckt wird und den Schritt 601 durchführt.

In einem Entscheidungsschritt 602 überprüft die Validierungsfunktion 62, ob zwischen einem vorherigen Einlesen der Zustandssignal-Eingänge 52, 53 und dem aktuellen Einlesen derselben die Signalwerte des Zustandssignals 96 verändert sind, also beispielsweise von logisch Null auf logisch 1 gewechselt haben. Wenn dies der Fall ist, durchläuft die Validierungsfunktion 62 einen Übergang 603 bis zu einem Schritt 604, in dem ein Validierungswert VAL inkrementiert wird oder auf einen festen Wert gesetzt wird, beispielsweise einen Wert größer als 1.

Ausgehend vom Schritt 604 geht die Validierungsfunktion 62 in einem Übergang 605 wieder zum Schritt 601 über, liest also erneut die Zustandssignal-Eingänge 52, 53 ein oder wartet darauf, erneut vom Prozessor 33 oder dem Betriebssystem 64 des Steuergeräts 30 aufgeweckt zu werden.

Wenn jedoch im Entscheidungsschritt 602 festgestellt wird, dass die Signalwerte an den Zustandssignal-Eingängen 52, 53 unverändert sind, findet ein Übergang 606 zum Schritt 601 ohne Veränderung des Validierungswerts VAL statt.

Die Steuermittel 59 hingegen dekrementieren den Validierungswert VAL jedes Mal, wenn sie die Antriebe 17, 18 zum Verstellen des Kupplungsarms 14 aus der Gebrauchsstellung G in die Nichtgebrauchstellung N oder umgekehrt ansteuern.

Weiterhin prüfen die Steuermittel 59 nicht nur wie bereits oben erwähnt die Zustandssignale 95-97 vor einer jeweiligen Ansteuerung der Antriebe 17, 18, sondern überprüfen auch, ob der Validierungswert VAL größer als 0 ist. Dann ist nämlich sichergestellt, dass das Zustandssignal 96 ein valides Zustandssignal ist, d. h. dass nicht beispielsweise ein Kabelbruch vorliegt. Wenn jedoch der Validierungswert VAL gleich 0 ist, wenn die Antriebe 17, 18 betätigt werden sollen, gibt das Steuergerät 30 beispielsweise an dem Ausgabemittel 44, insbesondere dem Leuchtmittel 44A, eine Warnmeldung aus. Daran erkennt der Bediener, dass er mindestens einmal das Kraftfahrzeug 80 betriebsbereit schalten muss, also eine Veränderung des Zustandssignals 96 bewirken muss, insbesondere durch Einschalten und/oder Ausschalten einer Zündung des Kraftfahrzeugs 80, damit die Anhängekupplung 10 wieder ansteuerbar ist.

Zugleich stellt die obige Routine eine Art Spielschutz oder einen Schutz gegen Fehlbedienung oder unbeabsichtigte Mehrfachbedienung dar. Wenn nämlich der Bediener nach dem Einschalten und anschließenden Ausschalten der Betriebsbereitschaft des Kraftfahrzeugs 80 das Steuergerät 30 mehrfach zum Verstellen des Kupplungsarms 14 ansteuert, also die Antriebe 17, 18 aktiviert, wird dabei jeweils der Validierungswert VAL verringert, d. h. die Anzahl von Möglichkeiten, die Antriebe 17, 18 zu aktivieren, nimmt mit jeder Bedienhandlung oder jeder Gabe des Schaltbefehls SA ab. Wenn also beispielsweise der Validierungswert VAL durch die Validierungsfunktion 62 bei einem Zustandswechsel des Zustandssignals 96 auf einen Wert 10 gesetzt wird, kann der Bediener zehnmal das Steuergerät 30 zum Verstellen des Kupplungsarms 14 betätigen. Danach muss er beispielsweise durch Betätigen einer Zündung des Kraftfahrzeugs 80 mindestens einmal die Betriebsbereitschaft des Kraftfahrzeugs 80 einschalten und ausschalten. Somit wird einer Fehlbedienung vorgebeugt, d. h. dass beispielsweise die Antriebe 17, 18 nicht durch eine zu häufige Schaltfolge überhitzt werden können.

In gleicher Weise kann auch beispielsweise das Zustandssignal 97 für die Fahrgeschwindigkeit des Kraftfahrzeugs 80 einer Validierung unterzogen werden. Beispielsweise ist das Zustandssignal 96 ein analoges Signal, dessen Spannungshöhe und/oder Spannungsfrequenz oder Schaltfrequenz eine Fahrgeschwindigkeit des Kraftfahrzeugs 80 repräsentiert. Das Zustandssignal 97 muss sich beispielsweise innerhalb einer vorbestimmten Zeit dann, wenn das Zustandssignal 96 eine Betriebsbereitschaft des Kraftfahrzeugs signalisiert, ändern, damit es von der Validierungseinrichtung 61 als valides Signal erkannt wird.

Es ist weiterhin möglich, dass die Validierungseinrichtung 61 eine Plausibilitätsprüfung durchführt.

Vorteilhaft ist es möglich, dass das Steuergerät 30 beispielsweise einen Bewegungssensor 63 aufweist. Wenn der Bewegungssensor 63 eine Bewegung des Kraftfahrzeugs 80 meldet, zugleich aber das Zustandssignal 97 den Stillstand des Kraftfahrzeugs 80 signalisiert, ist das Zustandssignal 97 nicht valide oder gültig.

Beispielsweise kann die Validierungseinrichtung 61 auch anhand der Geschwindigkeitsinformation 99 erkennen, ob das Zustandssignal 96 valide ist. Wenn nämlich das Zustandssignal 96 beispielsweise logisch Null ist, also signalisiert, dass das Kraftfahrzeug 80 nicht betriebsbereit oder ausgeschaltet ist, gleichzeitig aber die Geschwindigkeitsinformation 99 eine Fahrgeschwindigkeit deutlich größer 0 anzeigt, ist das Zustandssignal 96 nicht gültig oder valide. Eine derartige Plausibilitätsüberprüfung kann beispielsweise zyklisch durch die Validierungseinrichtung 61 durchgeführt werden.

Die Erfindung betrifft also ein Steuergerät für eine Anhängekupplung für ein Kraftfahrzeug, die einen an dem Kraftfahrzeug fahrzeugfest montierbaren Halter, an dem ein Kupplungsarm zwischen einer Gebrauchsstellung und einer Nichtgebrauchsstellung beweglich gelagert ist, wobei der Kupplungsarm einen Kuppelkörper zum Anhängen eines Anhängers aufweist, wobei die Anhängekupplung einen Kupplungsarm-Antrieb zum Verstellen des Kupplungsarms zwischen der Gebrauchsstellung und der Nichtgebrauchsstellung aufweist, wobei die Anhängekupplung und/oder das Steuergerät eine Sensoranordnung zur Erzeugung mindestens eines Sensorsignals in Abhängigkeit eines Anschlagens des Kupplungsarms an einem Hindernis auf der Bewegungsbahn zwischen der Gebrauchsstellung und der Nichtgebrauchsstellung aufweist, wobei das Steuergerät einen Steuereingang für ein Steuersignal und Steuermittel aufweist, die in Abhängigkeit von dem Steuersignal den Kupplungsarm-Antrieb zum Verstellen des Kupplungsarms in Richtung der Gebrauchsstellung oder der Nichtgebrauchsstellung ansteuern, und wobei das Steuergerät Hinderniserkennungsmittel aufweist, die anhand des Sensorsignals zu einer Ermittlung, ob der Kupplungsarm an einem Hindernis auf der Bewegungsbahn zwischen der Gebrauchsstellung oder Nichtgebrauchsstellung anschlägt, ausgestaltet sind. Die Steuermittel sind nach dem Anschlagen des Kupplungsarms an dem Hindernis zu mindestens einer erneuten Ansteuerung des Kupplungsarm-Antriebs zum Verstellen des Kupplungsarms in Richtung des Hindernisses, insbesondere im Sinne eines Überwindens des Hindernisses, ohne vorherige Ansteuerung durch das Steuersignal ausgestaltet, vorzugsweise nach einer dem Anschlagen des Kupplungsarms an dem Hindernis zunächst folgenden Ansteuerung des Kupplungsarm-Antriebs im Sinne einer Bewegung von dem Hindernis weg.

## Patentansprüche

1. Steuergerät (30) für eine Anhängekupplung (10) für ein Kraftfahrzeug (80), die einen an dem Kraftfahrzeug (80) fahrzeugfest montierten oder montierbaren Halter (12), an dem ein Kupplungsarm (14) zwischen einer zum Anhängen eines Anhängers (180) oder Ankoppeln eines Lastenträgers an das Kraftfahrzeug (80) vorgesehenen Gebrauchsstellung (G) und einer für den Nichtgebrauch des Kupplungsarms (14) vorgesehenen Nichtgebrauchsstellung (N) anhand einer Lagereinrichtung (13) beweglich gelagert ist, wobei der Kupplungsarm (14) an einem von der Lagereinrichtung (13) entfernten Endbereich einen Kuppelkörper (15A), insbesondere eine Kupplungskugel (15), zum Anhängen des Anhängers (180) oder Ankoppeln des Lastenträgers aufweist, wobei die Anhängekupplung (10) einen Kupplungsarm-Antrieb (18) zum Verstellen des Kupplungsarms (14) zwischen der Gebrauchsstellung (G) und der Nichtgebrauchsstellung (N) aufweist, wobei die Anhängekupplung (10) und/oder das Steuergerät (30) eine Sensoranordnung (24) zur Erzeugung mindestens eines Sensorsignals in Abhängigkeit eines Anschlagens des Kupplungsarms (14) an einem Hindernis (H1-H4) auf der Bewegungsbahn (BB) zwischen der Gebrauchsstellung (G) und der Nichtgebrauchsstellung (N) aufweist, wobei das Steuergerät (30) einen Steuereingang (57) für ein Steuersignal (SA) und Steuermittel (59) aufweist, die in Abhängigkeit von dem Steuersignal (SA) den Kupplungsarm-Antrieb (18) zum Verstellen des Kupplungsarms (14) in Richtung der Gebrauchsstellung (G) oder der Nichtgebrauchsstellung (N) ansteuern, und wobei das Steuergerät (30) Hinderniserkennungsmittel (58) aufweist, die anhand des Sensorsignals zu einer Ermittlung, ob der Kupplungsarm (14) an einem Hindernis (H1-H4) auf der Bewegungsbahn (BB) zwischen der Gebrauchsstellung (G) oder Nichtgebrauchsstellung (N) anschlägt, ausgestaltet sind, **dadurch gekennzeichnet, dass** die Steuermittel (59) nach dem Anschlagen des Kupplungsarms (14) an dem Hindernis (H1-H4) zu mindestens einer erneuten Ansteuerung des Kupplungsarm-Antriebs (18) zum Verstellen des Kupplungsarms (14) in Richtung des Hindernisses, insbesondere im Sinne eines Überwindens des Hindernisses (H1-H4), ohne vorherige Ansteuerung durch das Steuersignal (SA), nach einer dem Anschlagen des Kupplungsarms (14) an dem Hindernis (H1-H4) zunächst folgenden Ansteuerung des Kupplungsarm-Antriebs (18) im Sinne einer Bewegung von dem Hindernis (H1-H4) weg, ausgestaltet sind.

2. Steuergerät nach Anspruch 1, **dadurch gekennzeichnet, dass** die Steuermittel (59) im Falle eines Anschlagens, insbesondere im Falle eines erstmaligen Anschlagens, des Kupplungsarms (14) an dem Hindernis (H1-H4) zur Ansteuerung des Kupplungsarm-Antriebs (18) im Sinne einer Bewegung von dem Hindernis (H1-H4) weg oder zum Anhalten (10) des Kupplungsarms (14) ausgestaltet sind.

3. Steuergerät nach Anspruch 1 oder 2, **dadurch gekennzeichnet, dass** die Steuermittel (59) dazu ausgestaltet sind, nach einem Anschlagen des Kupplungsarms (14) an dem Hindernis (H1-H4) den Kupplungsarm (14) im Sinne einer Bewegung von dem Hindernis (H1-H4) weg in Richtung der jeweiligen Ausgangsstellung, der Gebrauchsstellung (G) oder der Nichtgebrauchsstellung (N), aus der der Kupplungsarm (14) in Richtung des Hindernisses (H1-H4) bewegt worden ist, insbesondere in einem Normalbetrieb bis zu einem Erreichen der jeweiligen Ausgangsstellung, anzusteuern.

4. Steuergerät nach Anspruch 3, **dadurch gekennzeichnet, dass** die Steuermittel (59) dazu ausgestaltet sind, wenn der Kupplungsarm (14) bei der Verstellung in Richtung der Ausgangsposition von dem ein erstes Hindernis (H1) bildenden Hindernis (H1) an einem zweiten Hindernis (H2) anschlägt, den Kupplungsarm-Antrieb (18) zu einer Bewegungsumkehr im Sinne einer Bewegung von dem zweiten Hindernis (H2) weg in Richtung des ersten Hindernisses (H1) im Sinne eines Überwindens des ersten Hindernisses (H1) anzusteuern.

5. Steuergerät nach einem der vorhergehenden Ansprüche, **dadurch gekennzeichnet, dass** die Steuermittel (59) dazu ausgestaltet sind, den Kupplungsarm-Antrieb (18) nur dann zu einer Bewegung im Sinne eines Überwindens des Hindernisses (H1-H4) anzusteuern, wenn der Kupplungsarm (14) von dem Hindernis (H1-H4) weg in Richtung der Ausgangsstellung nicht ohne ein Anschlagen an einem weiteren Hindernis (H1-H4) bewegbar ist.

6. Steuergerät nach einem der vorhergehenden Ansprüche, **dadurch gekennzeichnet, dass** die Steuermittel (59) dazu ausgestaltet sind, nach dem Anschlagen des Kupplungsarms (14) an einem jeweiligen Hindernis (H1-H4) den Kupplungsarm-Antrieb (18) zu einer Bewegungsumkehr in Richtung eines vorherigen Hindernisses (H1-H4) im Sinne einer oszillierenden Bewegung (OZ) anzusteuern, wobei vorteilhaft vorgesehen ist, dass die Steuermittel (59) dazu ausgestaltet sind, die Oszillationsbewegungen (OZ) nach einer vorbestimmten Anzahl von Bewegungen zu einem jeweiligen Hindernis (H1-H4) hin abzubrechen.

7. Steuergerät nach einem der vorhergehenden Ansprüche, **dadurch gekennzeichnet, dass** die Steuermittel (59) dazu ausgestaltet sind, nach dem Anschlagen des Kupplungsarms (14) an einem jeweiligen Hindernis (H1-H4) den Kupplungsarm-Antrieb (18) zu einer vorbestimmten und/oder einstellbaren Anzahl von Versuchen zu einem Verstellen des Kupplungsarms (14) in Richtung des Hindernisses (H1-H4) im Sinne eines Überwindens des Hindernisses (H1-H4) ohne vorherige Ansteuerung durch das Steuersignal (SA) anzusteuern.

8. Steuergerät nach einem der vorhergehenden Ansprüche, **dadurch gekennzeichnet, dass** die Steuermittel (59) dazu ausgestaltet sind, nach einem Anschlagen des Kupplungsarms (14) an einem Hindernis (H1-H4) den Kupplungsarm-Antrieb (18) nach einer vorbestimmten oder einstellbaren Wartezeit ohne vorherige Ansteuerung durch das Steuersignal (SA) erneut zum Verstellen des Kupplungsarms (14) in Richtung eines Hindernisses (H1-H4) im Sinne eines Überwindens des Hindernisses (H1-H4) anzusteuern, wobei vorteilhaft vorgesehen ist, dass die Steuermittel (59) dazu ausgestaltet sind, den Kupplungsarm-Antrieb (18) nach der Wartezeit ohne eine Bewegung von dem Hindernis (H1-H4) weg wieder in Richtung des Hindernisses (H1-H4) im Sinne eines Überwindens des Hindernisses (H1-H4) anzusteuern.

9. Steuergerät nach einem der vorhergehenden Ansprüche, **dadurch gekennzeichnet, dass** die Steuermittel (59) dazu ausgestaltet sind, den Kupplungsarm-Antrieb (18) nach einer vorbestimmten und/oder einstellbaren Anzahl von Versuchen, ein jeweiliges Hindernis (H1-H4) zu überwinden, zu einer Bewegungsumkehr von dem Hindernis (H1-H4) weg anzusteuern.

10. Steuergerät nach einem der vorhergehenden Ansprüche, **dadurch gekennzeichnet, dass** die Sensoranordnung (24) einen Bestandteil des Steuergeräts (30) bildet und/oder mindestens einen Stromsensor (56) zur Erfassung eines den Kupplungsarm-Antrieb (18) durchfließenden Motorstroms und/oder mindestens einen Bewegungssensor (23), insbesondere einen Hall-Sensor und/oder Drehsensor, zur Erfassung einer Bewegung, insbesondere Schwenk-Bewegung, des Kupplungsarms (14) aufweist.

11. Steuergerät nach einem der vorhergehenden Ansprüche, **dadurch gekennzeichnet, dass** es einen ersten einem ersten Bewegungsabschnitt (BB1) der Bewegungsbahn (BB) des Kupplungsarms (14) zugeordneten Grenzwert (Imax1) und mindestens einen von dem ersten Grenzwert (Imax1) verschiedenen zweiten, einem zweiten von dem ersten Bewegungsabschnitt (BB1) verschiedenen Bewegungsabschnitt (BB2) der Bewegungsbahn (BB) des Kupplungsarms (14) zugeordneten Grenzwert (Imax2) für das mindestens eine Sensorsignal aufweist.

12. Anhängekupplung (10) mit einem Steuergerät (30) nach einem der vorhergehenden Ansprüche.

13. Verfahren zur Ansteuerung einer Anhängekupplung (10) für ein Kraftfahrzeug (80) durch ein Steuergerät (30), wobei die Anhängekupplung (10) einen an dem Kraftfahrzeug (80) fahrzeugfest montierten oder montierbaren Halter (12), an dem ein Kupplungsarm (14) zwischen einer zum Anhängen eines Anhängers (180) oder Ankoppeln eines Lastenträgers an das Kraftfahrzeug (80) vorgesehenen Gebrauchsstellung (G) und einer für den Nichtgebrauch des Kupplungsarms (14) vorgesehenen Nichtgebrauchsstellung (N) anhand einer Lagereinrichtung (13) beweglich gelagert ist, wobei der Kupplungsarm (14) an einem von der Lagereinrichtung (13) entfernten Endbereich einen Kuppelkörper (15A), insbesondere eine Kupplungskugel (15), zum Anhängen des Anhängers (180) oder Ankoppeln des Lastenträgers aufweist, wobei die Anhängekupplung (10) einen Kupplungsarm-Antrieb (18) zum Verstellen des Kupplungsarms (14) zwischen der Gebrauchsstellung (G) und der Nichtgebrauchsstellung (N) aufweist, wobei die Anhängekupplung (10) und/oder das Steuergerät (30) eine Sensoranordnung (24) zur Erzeugung mindestens eines Sensorsignals in Abhängigkeit eines Anschlagens des Kupplungsarms (14) an einem Hindernis (H1-H4) auf der Bewegungsbahn (BB) zwischen der Gebrauchsstellung (G) und der Nichtgebrauchsstellung (N) aufweist, wobei das Steuergerät (30) einen Steuereingang (57) für ein Steuersignal (SA) und Steuermittel (59) aufweist, wobei die Steuermittel (59) in Abhängigkeit von dem Steuersignal (SA) den Kupplungsarm-Antrieb (18) zum Verstellen des Kupplungsarms (14) in Richtung der Gebrauchsstellung (G) oder der Nichtgebrauchsstellung (N) ansteuern, und wobei das Steuergerät Hinderniserkennungsmittel (58) aufweist, wobei die Hinderniserkennungsmittel (58) anhand des Sensorsignals ermitteln, ob der Kupplungsarm (14) an einem Hindernis (H1-H4) auf der Bewegungsbahn (BB) zwischen der Gebrauchsstellung (G) oder Nichtgebrauchsstellung (N) anschlägt, **dadurch gekennzeichnet, dass** die Steuermittel (59) nach dem Anschlagen des Kupplungsarms (14) an dem Hindernis (H1-H4) den Kupplungsarm-Antrieb (18) zum Verstellen des Kupplungsarms (14) in Richtung des Hindernisses (H1-H4), insbesondere im Sinne eines Überwindens des Hindernisses (H1-H4), ohne vorherige Ansteuerung durch das Steuersignal (SA) mindestens einmal erneut ansteuern, nach einer dem Anschlagen des Kupplungsarms (14) an dem Hindernis (H1-H4) zunächst folgenden Ansteuerung des Kupplungsarm-Antriebs (18) im Sinne einer Bewegung von dem Hindernis (H1-H4) weg.

14. Verfahren nach Anspruch 13, **dadurch gekennzeichnet, dass** die Steuermittel (59) im Falle eines Anschlagens, insbesondere im Falle eines erstmaligen Anschlagens, des Kupplungsarms (14) an dem oder einem Hindernis (H1-H4) den Kupplungsarm-Antrieb (18) im Sinne einer Bewegung von dem Hindernis (H1-H4) weg oder zum Anhalten (10) des Kupplungsarms (14) ansteuern.

15. Funktionssoftwaremodul für ein zum Ansteuern einer Anhängekupplung (10) vorgesehenes und/oder ausgestaltetes Steuergerät (30), wobei das Funktionssoftwaremodul Programmcode enthält, der bei Ausführung durch einen Prozessor (33) des Steuergeräts (30) das Verfahren nach Anspruch 13 oder 14 ausführt.

## Claims

1. Control unit (30) for a towbar (10) for a motor vehicle (80) which includes a bracket (12) that is fixed to, or mountable on, the motor vehicle (80), on which a coupling arm (14) is movably mounted with the help of a bearing device (13) between a use position (G) for attaching a trailer (180) or coupling a load carrier to the motor vehicle (80) and a non-use position (N) intended for the non-use of the coupling arm (14), wherein the coupling arm (14) has a coupling body (15A), in particular a coupling ball (15), at an end region remote from the bearing device (13), for attaching the trailer (180) or coupling the load carrier, wherein the towbar (10) comprises a coupling arm drive (18) for adjusting the coupling arm (14) between the use position (G) and the non-use position (N), wherein the towbar (10) and/or the control unit (30) has/have a sensor arrangement (24) for generating at least one sensor signal depending on the impact of the coupling arm (14) against an obstacle (H1-H4) on the movement path (BB) between the use position (G) and the non-use position (N), wherein the control unit (30) has a control input (57) for a control signal (SA) and control means (59) which, depending on the control signal (SA), activate the coupling arm drive (18) to adjust the coupling arm (14) in the direction of the use position (G) or the non-use position (N), and wherein the control unit (30) comprises obstacle detection means (58) configured to determine, based on the sensor signal, whether the coupling arm (14) strikes an obstacle (H1-H4) on the movement path (BB) between the use position (G) or the non-use position (N), **characterized in that** the control means (59), after the coupling arm (14) has struck the obstacle (H1-H4), are configured to reactivate the coupling arm drive (18) at least once to adjust the coupling arm (14) in the direction of the obstacle, in particular for the purpose of overcoming the obstacle (H1-H4), without prior activation by the control signal (SA), following an initial activation of the coupling arm drive (18) for the purpose of moving away from the obstacle (H1-H4) following the impact of the coupling arm (14) on the obstacle (H1-H4).

2. Control unit according to Claim 1, **characterized in that** in the event of an impact, in particular in the event of a first-time impact, of the coupling arm (14) against the obstacle (H1-H4), the control means (59) are configured to activate the coupling arm drive (18) for the purpose of moving away from the obstacle (H1-H4) or for stopping (10) the coupling arm (14).

3. Control unit according to Claim 1 or 2, **characterized in that** the control means (59) are configured, after an impact of the coupling arm (14) against the obstacle (H1-H4), to activate the coupling arm (14) for the purpose of moving away from the obstacle (H1-H4) in the direction of the initial position, the use position (G) or the non-use position (N), respectively, from which the coupling arm (14) has been moved in the direction of the obstacle (H1-H4), in particular in normal operation, until the respective initial position is reached.

4. Control unit according to Claim 3, **characterized in that** when the coupling arm (14), during the adjustment in the direction of the initial position, strikes a second obstacle (H2) after striking an obstacle (H1) forming a first obstacle (H1), the control means (59) are configured to activate the coupling arm drive (18) to perform a reverse movement for the purpose of moving away from the second obstacle (H2) in the direction of the first obstacle (H1) for the purpose of overcoming the first obstacle (H1).

5. Control unit according to any one of the preceding claims, **characterized in that** the control means (59) are configured to activate the coupling arm drive (18) to move for the purpose of overcoming the obstacle (H1-H4) only when the coupling arm (14) cannot be moved away from the obstacle (H1-H4) in the direction of the initial position without striking another obstacle (H1-H4).

6. Control unit according to any one of the preceding claims, **characterized in that** the control means (59) are configured, following the impact of the coupling arm (14) against a respective obstacle (H1-H4), to activate the coupling arm drive (18) to perform a reverse movement in the direction of a previous obstacle (H1-H4) within the meaning of an oscillating movement (OZ), wherein it is advantageously provided that the control means (59) are configured to stop the oscillation movements (OZ) after a predetermined number of movements towards a respective obstacle (H1-H4).

7. Control unit according to any one of the preceding claims, **characterized in that** the control means (59) are configured, following the impact of the coupling arm (14) against a respective obstacle (H1-H4), to activate the coupling arm drive (18) for a predetermined and/or adjustable number of attempts to adjust the coupling arm (14) in the direction of the obstacle (H1-H4) for the purpose of overcoming the obstacle (H1-H4) without prior activation by the control signal (SA).

8. Control unit according to any one of the preceding claims, **characterized in that** the control means (59) are configured, following an impact of the coupling arm (14) against an obstacle (H1-H4), to activate the coupling arm drive (18) once again to adjust the coupling arm (14) in the direction of an obstacle (H1-H4) for the purpose of overcoming the obstacle (H1-H4) after a predetermined or adjustable waiting time, without prior activation by the control signal (SA), wherein it is advantageously provided that the control means (59) are configured to activate the coupling arm drive (18) in the direction of the obstacle (H1-H4) once again, after the waiting time, without moving away from the obstacle (H1-H4), for the purpose of overcoming the obstacle (H1-H4).

9. Control unit according to any one of the preceding claims, **characterized in that** the control means (59) are configured to activate the coupling arm drive (18) towards a reverse movement away from the obstacle (H1-H4), after a predetermined and/or adjustable number of attempts to overcome a respective obstacle (H1-H4).

10. Control unit according to any one of the preceding claims, **characterized in that** the sensor arrangement (24) forms part of the control unit (30) and/or comprises at least one current sensor (56) for detecting a motor current flowing through the coupling arm drive (18) and/or at least one movement sensor (23), in particular a Hall sensor and/or a rotary sensor, for detecting a movement, in particular a pivoting motion, of the coupling arm (14).

11. Control unit according to any one of the preceding claims, **characterized in that** it has a first limit value (Imax 1) associated with a first movement section (BB1) of the movement path (BB) of the coupling arm (14) and at least a second limit value (Imax2) that differs from the first limit value (Imax1) and is associated with a second movement section (BB2) of the movement path (BB) of the coupling arm (14) that differs from the first movement section (BB 1) for the at least one sensor signal.

12. Towbar (10) with a control unit (30) according to any one of the preceding claims.

13. Method for activating a towbar (10) for a motor vehicle (80) by a control unit (30), wherein the towbar (10) includes a bracket (12) that is fixed to, or mountable on, the motor vehicle (80), on which a coupling arm (14) is movably mounted with the help of a bearing device (13) between a use position (G) for attaching a trailer (180) or coupling a load carrier to the motor vehicle (80) and a non-use position (N) intended for the non-use of the coupling arm (14), wherein the coupling arm (14) has a coupling body (15A), in particular a coupling ball (15), at an end region remote from the bearing device (13), for attaching the trailer (180) or coupling the load carrier, wherein the towbar (10) comprises a coupling arm drive (18) for adjusting the coupling arm (14) between the use position (G) and the non-use position (N), wherein the towbar (10) and/or the control unit (30) has/have a sensor arrangement (24) for generating at least one sensor signal depending on the impact of the coupling arm (14) against an obstacle (H1-H4) on the movement path (BB) between the use position (G) and the non-use position (N), wherein the control unit (30) has a control input (57) for a control signal (SA) and control means (59), wherein, depending on the control signal (SA), the control means (59) activate the coupling arm drive (18) to adjust the coupling arm (14) in the direction of the use position (G) or the non-use position (N), and wherein the control unit (30) comprises obstacle detection means (58) configured to determine, based on the sensor signal, whether the coupling arm (14) strikes an obstacle (H1-H4) on the movement path (BB) between the use position (G) or the non-use position (N), **characterized in that** the control means (59), after the coupling arm (14) has struck the obstacle (H1-H4), are configured to reactivate the coupling arm drive (18) at least once to adjust the coupling arm (14) in the direction of the obstacle (H1-H4), in particular for the purpose of overcoming the obstacle (H1-H4), without prior activation by the control signal (SA), following an initial activation of the coupling arm drive (18) for the purpose of moving away from the obstacle (H1-H4) following the impact of the coupling arm (14) on the obstacle (H1-H4).

14. Method according to Claim 13, **characterized in that** the control means (59), in the event of an impact, in particular in the event of a first-time impact, of the coupling arm (14) against the, or an, obstacle (H1-H4), activate the coupling arm drive (18) for the purpose of moving away from the obstacle (H1-H4) or for stopping (10) the coupling arm (14).

15. Functional software module for a control unit (30) provided and/or configured to activate a towbar (10), wherein the functional software module contains a program code which, when executed by a processor (33) of the control unit (30), implements the method according to Claim 13 or 14.

## Revendications

1. Appareil de commande (30) pour un attelage de remorque (10) pour un véhicule à moteur (80), qui un support (12) monté ou pouvant être monté de manière solidaire au véhicule sur le véhicule à moteur (80), sur lequel un bras d'attelage (14) est monté de manière mobile à l'aide d'un dispositif de palier (13) entre une position d'utilisation (G) prévue sur le véhicule à moteur (80) pour atteler une remorque (180) ou accoupler un porte-charge et une position de non-utilisation (N) prévue pour la non-utilisation du bras d'attelage (14), dans lequel le bras d'attelage (14) présente sur une zone d'extrémité éloignée du dispositif de palier (13), un corps de couplage (15A), en particulier une boule d'attelage (15), pour atteler la remorque (180) ou accoupler le porte-charge, dans lequel l'attelage de remorque (10) présente un entraînement de bras d'attelage (18) pour ajuster le bras d'attelage (14) entre la position d'utilisation (G) et la position de non-utilisation (N), dans lequel l'attelage de remorque (10) et/ou l'appareil de commande (30) présentent un ensemble capteur (24) destiné à générer au moins un signal de capteur en fonction d'une butée du bras d'attelage (14) sur un obstacle (H1-H4) sur la voie de déplacement (BB) entre la position d'utilisation (G) et la position de non-utilisation (N), dans lequel l'appareil de commande (30) présente une entrée de commande (57) pour un signal de commande (SA) et des moyens de commande (59), qui pilotent, en fonction du signal de commande (SA), l'entraînement de bras d'attelage (18) pour ajuster le bras d'attelage (14) en direction de la position d'utilisation (G) ou de la position de non-utilisation (N), et dans lequel l'appareil de commande (30) présente des moyens de reconnaissance d'obstacle (58), qui sont configurés pour déterminer, à l'aide du signal de capteur, si le bras d'attelage (14) vient buter sur un obstacle (H1-H4) sur la voie de déplacement (BB) entre la position d'utilisation (G) ou la position de non-utilisation (N), **caractérisé en ce que** les moyens de commande (59) sont configurés pour, après que le bras d'attelage (14) a buté sur l'obstacle (H1-H4), piloter à nouveau au moins l'entraînement de bras d'attelage (18) pour ajuster le bras d'attelage (14) en direction de l'obstacle, en particulier au sens de surmonter l'obstacle (H1-H4), sans pilotage préalable par le signal de commande (SA), après un pilotage de l'entraînement de bras d'attelage (18) suivant la butée du bras d'attelage (14) sur l'obstacle (H1-H4) au sens d'un déplacement s'éloignant de l'obstacle (H1-H4).

2. Appareil de commande selon la revendication 1, **caractérisé en ce que** les moyens de commande (59) sont configurés, dans le cas d'une butée, en particulier dans le cas d'une toute première butée, du bras d'attelage (14) sur l'obstacle (H1-H4), pour piloter l'entraînement de bras d'attelage (18) au sens d'un déplacement tout en s'éloignant de l'obstacle (H1-H4) ou pour arrêter (10) le bras d'attelage (14).

3. Appareil de commande selon la revendication 1 ou 2, **caractérisé en ce que** les moyens de commande (59) sont configurés pour piloter, après la butée du bras d'attelage (14) sur l'obstacle (H1-H4), le bras d'attelage (14) au sens d'un déplacement en s'éloignant de l'obstacle (H1-H4) en direction de la position de départ respective, de la position d'utilisation (G) ou de la position de non-utilisation (N), depuis laquelle le bras d'attelage (14) a été déplacé en direction de l'obstacle (H1-H4), en particulier dans un mode de fonctionnement normal jusqu'à atteindre la position de départ respective.

4. Appareil de commande selon la revendication 3, **caractérisé en ce que** les moyens de commande (59) sont configurés pour piloter l'entraînement de bras d'attelage (18) pour une inversion de déplacement au sens d'un déplacement s'éloignant du deuxième obstacle (H2) en direction du premier obstacle (H1), au sens de surmonter le premier obstacle (H1), lorsque le bras d'attelage (14) vient buter depuis l'obstacle (H1) formant un premier obstacle (H1) sur un deuxième obstacle (H2) lors de l'ajustement en direction de la position de départ.

5. Appareil de commande selon l'une quelconque des revendications précédentes, **caractérisé en ce que** les moyens de commande (59) sont configurés pour piloter l'entraînement de bras d'attelage (18) seulement alors pour un déplacement au sens de surmonter l'obstacle (H1-H4) lorsque le bras d'attelage (14) peut être déplacé en s'éloignant de l'obstacle (H1-H4) en direction de la position de départ non sans buter sur un autre obstacle (H1-H4).

6. Appareil de commande selon l'une quelconque des revendications précédentes, **caractérisé en ce que** les moyens de commande (59) sont configurés pour piloter, après la butée du bras d'attelage (14) sur un obstacle (H1-H4) respectif, l'entraînement de bras d'attelage (18) pour une inversion de déplacement en direction d'un obstacle (H1-H4) précédent au sens d'un déplacement par oscillation (OZ), dans lequel il est prévu avantageusement que les moyens de commande (59) sont configurés pour interrompre les déplacements par oscillation (OZ) après un nombre prédéfini de déplacements vers un obstacle (H1-H4) respectif.

7. Appareil de commande selon l'une quelconque des revendications précédentes, **caractérisé en ce que** les moyens de commande (59) sont configurés pour piloter, après la butée du bras d'attelage (14) sur un obstacle (H1-H4) respectif, l'entraînement de bras d'attelage (18) jusqu'à un nombre prédéfini et/ou pouvant être réglé de tentatives, pour ajuster le bras d'attelage (14) en direction de l'obstacle (H1-H4) au sens de surmonter l'obstacle (H1-H4) sans pilotage préalable par le signal de commande (SA).

8. Appareil de commande selon l'une quelconque des revendications précédentes, **caractérisé en ce que** les moyens de commande (59) sont configurés pour piloter l'entraînement de bras d'attelage (18) après un temps d'attente prédéfini ou pouvant être réglé sans pilotage antérieur par le signal de commande (SA) à nouveau pour ajuster le bras d'attelage (14) en direction d'un obstacle (H1-H4) au sens de surmonter l'obstacle (H1-H4) après une butée du bras 'attelage (14) sur un obstacle (H1-H4), dans lequel il est avantageusement prévu que les moyens de commande (59) sont configurés pour piloter l'entraînement de bras d'attelage (18) après le temps d'attente sans un déplacement s'éloignant de l'obstacle (H1-H4) à nouveau en direction de l'obstacle (H1-H4) au sens de surmonter l'obstacle (H1-H4).

9. Appareil de commande selon l'une quelconque des revendications précédentes, **caractérisé en ce que** les moyens de commande (59) sont configurés pour piloter l'entraînement de bras d'attelage (18) après un nombre prédéfini et/ou pouvant être réglé de tentatives pour surmonter un obstacle (H1-H4) respectif, pour une inversion de déplacement en s'éloignant de l'obstacle (H1-H4).

10. Appareil de commande selon l'une quelconque des revendications précédentes, **caractérisé en ce que** l'ensemble capteur (24) fait partie intégrante de l'appareil de commande (30) et/ou présente au moins un capteur de courant (56) pour détecter un courant de moteur traversant l'entraînement de bras de soufflage (18) et/ou au moins un détecteur de déplacement (23), en particulier un capteur à effet Hall et/ou un capteur de rotation, pour détecter un déplacement, en particulier un déplacement pivotant, du bras d'attelage (14).

11. Appareil de commande selon l'une quelconque des revendications précédentes, **caractérisé en ce qu'**il présente une première valeur limite (Imax1) associée à une première section de fixation (BB1) de la voie de déplacement (BB) du bras d'attelage (14) et au moins une deuxième valeur limite (Imax2) différente de la première valeur limite (Imax1), associée à une deuxième section de fixation (BB2), différente de la première section de fixation (BB1), du trajet de déplacement (BB) du bras d'attelage (14) pour l'au moins un signal de capteur.

12. Attelage de remorque (10) avec un appareil de commande (30) selon l'une quelconque des revendications précédentes.

13. Procédé pour piloter un attelage de remorque (10) pour un véhicule à moteur (80) par un appareil de commande (30), dans lequel l'attelage de remorque (10) qui un support (12) monté ou pouvant être monté de manière solidaire au véhicule sur le véhicule à moteur (80), sur lequel un bras d'attelage (14) est monté de manière mobile à l'aide d'un dispositif de palier (13) entre une position d'utilisation (G) prévue pour atteler une remorque (180) ou accoupler un porte-charge au véhicule à moteur (80) et une position de non-utilisation (N) prévue pour la non-utilisation du bras d'attelage (14), dans lequel le bras d'attelage (14) présente sur une zone d'extrémité éloignée du dispositif de palier (13), un corps de couplage (15A), en particulier une boule d'attelage (15), pour atteler la remorque (180) ou accoupler le porte-charge, dans lequel l'attelage de remorque (10) présente un entraînement de bras d'attelage (18) pour ajuster le bras d'attelage (14) entre la position d'utilisation (G) et la position de non-utilisation (N), dans lequel l'attelage de remorque (10) et/ou l'appareil de commande (30) présentent un ensemble capteur (24) destiné à générer au moins un signal de capteur en fonction d'une butée du bras d'attelage (14) sur un obstacle (H1-H4) sur la voie de déplacement (BB) entre la position d'utilisation (G) et la position de non-utilisation (N), dans lequel l'appareil de commande (30) présente une entrée de commande (57) pour un signal de commande (SA) et des moyens de commande (59), qui pilotent, en fonction du signal de commande (SA), l'entraînement de bras d'attelage (18) pour ajuster le bras d'attelage (14) en direction de la position d'utilisation (G) ou de la position de non-utilisation (N), et dans lequel l'appareil de commande présente des moyens de reconnaissance d'obstacle (58), dans lequel les moyens de reconnaissances d'obstacle (58) déterminent à l'aide du signal de capteur si le bras d'attelage (14) vient buter sur un obstacle (H1-H4) sur la voie de déplacement (BB) entre la position d'utilisation (G) ou la position de non-utilisation (N), **caractérisé en ce que** les moyens de commande (59) sont configurés pour, après que le bras d'attelage (14) a buté sur l'obstacle (H1-H4), piloter au moins à nouveau l'entraînement de bras d'attelage (18) pour ajuster le bras d'attelage (14) en direction de l'obstacle (H1-H4), en particulier au sens de surmonter l'obstacle (H1-H4), sans pilotage préalable par le signal de commande (SA), après un pilotage de l'entraînement de bras d'attelage (18) suivant la butée du bras d'attelage (14) sur l'obstacle (H1-H4) au sens d'un déplacement s'éloignant de l'obstacle (H1-H4).

14. Procédé selon la revendication 13, **caractérisé en ce que** les moyens de commande (59) pilotent l'entraînement de bras d'attelage (18) au sens d'un déplacement s'éloignant de l'obstacle (H1-H4) ou pour arrêter (10) le bras d'attelage (14) dans le cas d'une butée, en particulier dans le cas de la toute première butée, du bras d'attelage (14) sur le ou un obstacle (H1-H4).

15. Module de logiciel fonctionnel pour un appareil de commande (30) prévu et/ou configuré pour piloter l'attelage de remorque (10), dans lequel le module de logiciel fonctionnel contient un code de programme, qui exécute le procédé selon la revendication 13 ou 14 lors de l'exécution par un processeur (33) de l'appareil de commande (30).
